# FASCICULE DE BREVET EUROPEEN

(11) **EP 2 349 923 B1**
(45) Date de publication et mention de la délivrance du brevet: **04.12.2013**
(21) Numéro de dépôt: 09760203.1
(22) Date de dépôt: 23.10.2009
(51) Int. Cl.: C01B 13/14, C01B 25/45, C01D 1/02, C01G 49/02, C01B 25/30, H01M 4/48

(54) **PROCEDE D'ELABORATION DE COMPOSES INORGANIQUES**
VERFAHREN ZUR HERSTELLUNG VON ANORGANISCHEN VERBINDUNGEN
METHOD FOR PRODUCING INORGANIC COMPOUNDS

(30) Priorité: 23.10.2008 FR 0805875; 28.05.2009 FR 0953529; 27.07.2009 FR 0955233
(43) Date de publication de la demande: 03.08.2011
(73) Titulaire: Centre National de la Recherche Scientifique, 75016 Paris (FR); Université de Picardie Jules Verne, 80039 Amiens (FR)
(72) Inventeur: TARASCON, Jean-Marie, F-91540 Mennecy (FR); RECHAM, Nadir, F-80000 Amiens (FR); ARMAND, Michel, F-75014 Paris (FR)
(74) Mandataire: Goulard, Sophie
(86) Numéro de dépôt international: PCT/FR2009/052038
(87) Numéro de publication internationale: WO 2010/046608

(56) Documents cités:
- WO-A-02/27824
- DE-A1-102006 011 754
- JP-A- 2004 035 303
- US-A1- 2007 117 019
- N. RECKHAM ET.AL.: "Ionothermal Synthesis of Li-Based Fluorophosphates Electrodes" CHEMISTRY OF MATERIALS, vol. 22, 11 avril 2009 (2009-04-11), pages 1142-1148, XP002568190

## Description

La présente invention concerne un nouveau procédé d'élaboration de composés inorganiques sous forme de poudre en milieu liquide ionique à basse température.

### L'art antérieur

Les matériaux sous forme de poudre, qu'ils soient minéraux, organiques ou organométalliques, sont d'une grande utilité, notamment comme céramiques utilisées telles quelles ou destinées au frittage, pour les matériaux magnétiques pour le stockage de l'information, pour les pigments et les matériaux luminescents des systèmes d'affichage, ou encore pour une utilisation en tant que composants des électrodes, en particulier des batteries au lithium.

Ces matériaux sont généralement préparés selon des méthodes céramiques ou des méthodes solvothermales.

Selon les méthodes céramiques, les précurseurs du produit final sont traités à une température permettant aux atomes, ions ou entités covalentes (SO₄²⁻, PO₄³⁻, ...) de diffuser, et aux produits volatils de s'éliminer.

Les hautes températures utilisées provoquent également la pyrolyse d'entités organiques ayant servi de sources des éléments correspondants (alkoxydes) ou d'agent de gélification pour éviter la croissance de grains (méthode sol-gel), en particulier dans les méthodes mettant en présence un polyacide (l'acide tartrique, citrique...) et un polyalcool. On forme ainsi des poudres, sous atmosphère oxydante, neutre ou réductrice. Il est très rare de pouvoir effectuer ce type de réactions à des températures inférieures à 450°C, en dessous desquelles les précurseurs réagissent incomplètement et/ou sont mal cristallisés. À plus haute température, se pose le problème de la volatilisation des éléments alcalins (Li, Na, K) sous forme d'oxyde ou de fluorure, ce qui modifie la stoechiométrie attendue. Ces méthodes céramiques sont coûteuses en énergie. Un autre inconvénient des méthodes céramiques est la polydispersité des poudres obtenues.

Compte tenu des inconvénients des méthodes par voie céramique, on préfère utiliser les méthodes solvothermales, en particulier les méthodes hydrothermales, qui sont des méthodes de précipitation en milieu liquide, à pression ordinaire ou dans un autoclave. Les méthodes de précipitation en milieu liquide sont économes en énergie et, si les phénomènes de nucléation-croissance sont contrôlés, elles donnent des distributions de tailles beaucoup plus étroites. Cependant, pour ces méthodes solvothermales, il est nécessaire de disposer de précurseurs solubles des éléments qui entreront dans la composition du produit final. De plus, ces méthodes solvothermales génèrent des sous-produits de réaction qu'il faut retraiter. Ces deux facteurs engendrent un surcoût de production significatif.

La plupart des réactions de précipitation requièrent des variations du degré de solubilité des réactifs en fonction de la température ou du pH. De nombreux composés à base de métaux sont obtenus en introduisant leurs précurseurs dans un liquide support réactionnel, puis en ajoutant des composés basiques et en laissant mûrir (maturation d'Oswald), le processus étant accéléré par l'élévation de la température. L'élévation de température permet aussi de désolvater des phases solvantoscopiques, et d'effectuer des réactions de polycondensation du type :

≡M—OH + HO—M≡ => ≡M—O—M≡ + H₂O (M = Métal, Si, Ge).

L'inconvénient de ce procédé est la formation rapide, voire immédiate, de précipités de sels insolubles aux pH basiques, ou d'hydroxyde des métaux concernés, sans contrôle de l'étape de nucléation. Un autre inconvénient est la possibilité d'une oxydation rapide des composés ou des hydroxydes métalliques par l'oxygène de l'air, alors que les sels solubles correspondants sont stables vis-à-vis de l'air en milieu acide ou neutre. Ce problème est particulièrement préoccupant pour les composés du fer", du nickel^{II}, du cobalt^{II}, du titane^{II/III}, du cérium^{III} et du terbium^{III}. Il en résulte des variations de la stoechiométrie finale, de la couleur et des propriétés magnétiques, ainsi que, pour les matériaux d'électrode, une capacité massique plus faible et/ou un relargage d'ions métalliques dans l'électrolyte. Tous ces phénomènes sont préjudiciables à des synthèses reproductibles et nécessitent de travailler sous atmosphère inerte impliquant notamment un dégazage complet des solvants. De plus, pour ces synthèses en milieu liquide, les bases ajoutées sont souvent onéreuses car elles doivent correspondre à des critères de pureté du produit final tout en évitant toute contamination par des cations étrangers.

La synthèse hydrothermale du phosphate double de fer et de lithium LiFePO₄ est un exemple important de synthèse solvothermale. Elle s'effectue selon le schéma réactionnel suivant :

H₃PO₃ + FeSO₄ + 3LiOH => LiFePO₄ + Li₂SO₄ + 3H₂O

Cette synthèse requiert 3 équivalents d'hydroxyde de lithium (LiOH), qui est un composé onéreux. Il est donc nécessaire de recycler une solution diluée qui ne peut être relarguée telle quelle comme effluent, et de reconvertir les produits qu'elle contient en LiOH pur, ce qui est coûteux en énergie et en réactifs. Le remplacement d'une partie de LiOH par NaOH ou KOH a été envisagé, mais il entraîne une contamination de la phase LiFePO₄, respectivement par les ions sodium ou potassium. De plus, Fe(OH)₂ précipité en milieu basique est extrêmement sensible à l'oxydation par l'oxygène de l'air et il en résulte une contamination du produit final LiFePO₄ par le fer trivalent.

Un autre inconvénient des méthodes solvothermales est le domaine de stabilité, acido-basique ou rédox, limité des solvants utilisés. L'eau, en particulier, est limitée à un domaine de pH de 14 et à une fenêtre rédox de 1,3 V à 25°C qui diminue avec la température. Les solvants organiques présentent des inconvénients similaires car leurs propriétés solubilisantes ne sont acquises que par la présence de groupes polaires [OH, CONH₂, CON(H)R], donc par la présence d'hydrogène labile, dont les limites acido-basique et redox sont proches de celles de l'eau.

Les liquides ioniques (IL) sont des sels dont, par définition, la température de fusion est ≤ 100°C. Pour obtenir des températures de fusion (T_{F}) basses, qui se démarquent nettement de celles des dérivés minéraux (ex. : NaCl, T_{F} = 801 °C), on fait appel à des cations et anions organiques. Les charges positives sont généralement portées par des cations « ium » tels que par exemple les cations ammonium, phosphonium, sulfonium, pyridinium et imidazolium. Les charges négatives sont portées par des anions à charge délocalisée, tels que BF₄⁻, PF₆⁻, CF₃SO₃⁻, [(CF₃SO₂)₂N]⁻. Ces composés sont stables à des températures élevées (≥300 °C), ils ne présentent pas de pression de vapeur jusqu'à cette température et ils possèdent un domaine de stabilité redox important, de l'ordre de 3 à 4 V. Ils sont de bons solvants de nombreux composés organiques sous forme de molécules discrètes ou de polymères. Les sels de métaux ont une solubilité appréciable dans les liquides ioniques lorsqu'ils présentent des énergies réticulaires très faibles, par exemple les sels des anions précités BF₄⁻, PF₆⁻, CF₃SO₃⁻, [(CF₃SO₂)₂N]⁻, en particulier les sels de lithium qui présentent un intérêt pour l'électrochimie, pour les batteries ou les supercapacités. Lesdits sels sont cependant inintéressants pour tout processus chimique de préparation de poudres du fait de leur coût élevé et de la difficulté de les purifier, du fait de leur très grande solubilité dans tous les solvants polaires et de leur caractère très hygroscopique. En revanche, les sels communément utilisés en chimie préparative, tels que les chlorures et *a fortiori* les sels d'anions dont la charge est ≥ 2, tels que par exemple SO₄²⁻, PO₄³⁻, CO₃²⁻, C₂O₄²⁻, présentent une solubilité négligeable dans les liquides ioniques. Les liquides ioniques ont récemment été utilisés à titre de solvant et de matrice pour la synthèse de matériaux mésoporeux à composantes organiques/inorganiques tels que des zéolithes et des MOFs (de l'expression anglaise « Metal Organic Framework »), (Parham E. R. et al., Acc. Chem. Res., 2007, 40(10), 1005-1013 ; Lin Z. et al., Dalton Trans., 2008, 3989-3994).

DE-10 2006 011754 décrit l'utilisation d'un liquide ionique comme support liquide pour la synthèse d'oxydes conducteurs ou semi-conducteurs, plus particulièrement d'oxydes de Sn, de In, de Zn, de Bi, lesdits oxydes étant éventuellement dopé. Le procédé consiste à introduire les précurseurs dans une phase liquide contenant un liquide ionique et un co-solvant, à éliminer le co-solvant par chauffage, puis à traiter la dispersion par micro-ondes, sous vide, pour obtenir les particules d'oxyde cristallisé. Cependant, dans ce procédé, les précurseurs sont mis en contact avec le co-solvant qui est un liquide dans lequel ils sont solubles et/ou miscibles. Les précurseurs réagissent alors immédiatement entre eux pour former l'oxyde recherché et la vitesse de réaction ne permet pas le contrôle de la croissance des grains.

### La présente invention

Le but de la présente invention est de pallier les inconvénients des procédés de l'art antérieur pour la préparation de poudres en proposant un procédé de préparation d'un oxyde inorganique complexe qui soit économe en énergie et en matières premières et qui permette d'obtenir des particules homogènes tout en évitant les phénomènes d'oxydation des réactifs sensibles à l'air.

Ce but est atteint par le procédé qui fait l'objet de la présente invention. Il a en effet été trouvé que, de manière surprenante, des oxydes complexes ou des composés polyanioniques peuvent être préparés dans un support liquide comprenant un liquide ionique, à partir de précurseurs qui ont une solubilité nulle ou très faible dans ledit support liquide, par réaction desdits précurseurs à basse température, (domaine de température voisin de 300°C dans lequel la plupart des liquides ioniques sont thermiquement stables) c'est-à-dire à des températures nettement inférieures aux températures employées par les méthodes céramiques conventionnelles, pour obtenir des poudres de granulométrie contrôlée, en particulier de tailles nanométriques et dont la séparation du milieu réactionnel est particulièrement aisée, ainsi que le recyclage des effluents et du liquide ionique support de la réaction. En outre, ledit procédé permet d'utiliser des produits de départ hydratés, dont le coût est considérablement réduit par rapport aux produits anhydres et dont la manipulation aisée, même pour des précurseurs dont la déshydratation *ex situ* induit des phénomènes d'auto-oxydation, en particulier pour les sels de fer. Par ailleurs, le procédé de l'invention, qui met en oeuvre un liquide ionique, permet de faire croître électrochimiquement à des températures inférieures à 200°C, certains oxydes, oxyfluorures, composés polyanioniques et composés d'éléments de transition tels que Fe³⁺ ou Mn⁺³ capables d'être réduits.

La présente invention a pour objet un procédé pour la préparation d'un composé inorganique de formule (I) AₐMₘ(YO₄)_{y}Z_{z} (I) dans laquelle :
- A représente au moins un élément choisi parmi les métaux alcalins, les métaux alcalino-terreux, un élément dopant et une lacune ;
- M représente (T₁₋ₜT'ₜ), T représentant un ou plusieurs métaux de transition et T' représentant au moins un élément choisi Mg, Ca, Al, et les terres rares, 0≤t<1 ;
- Y représente au moins un élément choisi parmi S, Se, P, As, Si, Ge et Al ;
- Z représente au moins un élément choisi parmi F, O ou OH
- a, m, y, et z sont les coefficients stoechiométriques et sont des nombres réels nuls ou positifs avec les conditions suivantes :
   * a, m, t, y, et z sont tels que la neutralité électrique de l'oxyde inorganique de formule (I) est respectée,
   * a ≥ 0 ; m > 0 ; y>0
   * z ≥ 0 ;
à partir de précurseurs des éléments constitutifs de l'oxyde inorganique de formule (I), ledit procédé étant caractérisé en ce qu'il comprend les étapes suivantes :
i) la dispersion desdits précurseurs dans un liquide support comprenant un ou plusieurs liquides ioniques constitués d'un cation et d'un anion dont les charges électriques s'équilibrent, pour obtenir une suspension desdits précurseurs dans ledit liquide,
ii) le chauffage de ladite suspension à une température de 25 à 380°C,
iii) la séparation dudit liquide ionique et de l'oxyde inorganique de formule (I) issu de la réaction entre lesdits précurseurs.

Lors de l'étape i), il est possible d'utiliser des précurseurs contenant chacun un seul des éléments se retrouvant dans l'oxyde inorganique de formule (I) visé. II est également possible d'utiliser des précurseurs contenant au moins deux des éléments se retrouvant dans l'oxyde inorganique de formule (I).

Les précurseurs d'un métal alcalin ou alcalino-terreux A peuvent être choisis parmi les sels d'anions thermolabiles, tels que les carbonates, les hydrogéno-carbonates, les hydroxydes, les peroxydes, les nitrates ; les sels d'acides organiques volatils tels que les acétates et les formates ; les sels d'acides décomposables à chaud tels que les oxalates, les malonates et les citrates. Parmi de tels précurseurs, on peut en particulier citer à titre d'exemple Li₂CO₃, LiHCO₃, LiOH, Li₂O₂, LiNO₃, LiCH₃CO₂, LiCHO₂, Li₂C₂O₄, Li₃C₆H₅O₇, Na₂CO₃, NaOH, Na₂O₂, NaNO₃, NaCH₃CO₂, NaCHO₂, Na₂C₂O₄, Na₃C₆H₅O₇, K₂CO₃, KOH, K₂O₂, KO₂ KNO₃, KCH₃CO₂, KCHO₂, K₂C₂O₄, K₃C₆H₅O₇ et leurs hydrates.

Les précurseurs d'un métal de transition M et de terres rares peuvent être choisis parmi les sels d'acides inorganiques volatils tels que les nitrates et les carbonates, les sels d'acides organiques volatils tels que les acétates et les formates et les sels d'acides décomposables à chaud tels que les oxalates, les malonates et les citrates. D'une manière très intéressante au point de vue économique ils peuvent également être choisis parmi les sels d'acides inorganiques conventionnels, tels les sulfates, les chlorures et les bromures. Dans ce dernier cas, le milieu réactionnel contient, à l'issue de l'étape ii), des produits de la réaction autres que le ou les oxydes complexes de formule (I) recherchés, en particulier des chlorures ou sulfates solubles en particulier de métaux alcalins qui sont solubles dans l'eau et qui peuvent être séparés facilement à l'étape iii) du procédé.

Parmi les précurseurs d'un métal de transition M et de terres rares, on peut notamment citer à titre d'exemple :
- TiCl₄, (NH₄)₂TiO(C₃H₄O₃)₂, (NH₄)₂TiO(C₂O₄)₂, (NH₄)₂TiF₆, Ti(OR¹)₄, et Ti(NR²)₄ dans lesquels chacun des groupes R¹, respectivement chacun des groupes R², représente indépendamment des autres un groupe alkyle ayant de préférence de 1 à 10 atomes de carbone ;
- FeCl₃, Fe₂(SO₄)₃, Fe(NO₃)₃ et NH₄Fe(SO₄)₂ et leurs hydrates ;
- FeCl₂, FeSO₄, Fe(C₂O₄), Fe(CH₃CO₂)₂ (notamment pour la préparation de LiFePO₄ et de ses solutions solides) et leurs hydrates ;
- Mncl₂, MnSO₄, Mn(C₂O₄), Mn(CH₃CO₂)₂, Mn(NO₃)₂ et leurs hydrates (notamment pour la préparation de LiMnPO₄, LiMnBO₃ et de leurs solutions solides) ;
- CoCl₂, CoSO₄, Co(C₂O₄), Co(CH₃CO₂)₂, Co(NO₃)₂ et leurs hydrates ;
- NiCl₂, NiSO₄, Ni(C₂O₄), Ni(CH₃CO₂)₂, Ni(NO₃)₂ et leurs hydrates ;
- CrCl₃, Cr₂(SO₄)₃, Cr(NO₃)₃ et leurs hydrates ;
- VOCl₂, VOSO₄ et leurs hydrates.

Les précurseurs des oxyanions YO₄ peuvent être choisis parmi les acides correspondants tels que H₂SO₄, H₃PO₄ ; les sels d'ammonium, d'amine, d'imidazole ou de pyridine thermolabiles tels que par exemple NH₄HSO₄, (NH₄)₂SO₄, NH₄HSeO₄, (NH₄)₂SeO₄, NH₄H₂PO₄, (NH₄)₂HPO₄, NH₄H₂AsO₄ et (NH₄)₂HAsO₄ ; les dérivés du silicium ou du germanium sous forme de Si02 ou GeO₂ nanométriques ; les dérivés de tétraalkoxysilanes ou de germanes tels que (R³O)₄Si et (R³O)₄Ge ou les polymères -Si[OR³)₂-I]ₚ (avec 0 ≤ p ≤ 10⁴) et dans lesquels R³ représente un groupe alkyle ou alkyloxyalkyle ayant de préférence de 1 à 10 atomes de carbone, de préférence un radical méthyle, éthyle ou méthoxyéthyle.

Il est également possible, dans le cadre de l'invention, d'introduire les éléments des oxyanions sous forme de sel alcalin ou alcalino-terreux. Cet élément ainsi introduit peut être incorporé dans l'oxyde complexe lors de la réaction avec le liquide ionique ou bien former un sous produit de réaction de type chlorure ou sulfate (si l'oxyde complexe n'introduit pas cet anion) qu'il est ensuite facile d'éliminer à l'étape iii) par lavage à l'eau ou dans un alcool inférieur tel que par exemple le méthanol, l'éthanol, l'éthylèneglycol, le propylèneglycol et le glycérol. A titre d'exemple, on peut citer AHSO₄, A₂SO₄, AHSeO₄, A₂SeO₄, AH₂PO₄, A₂HPO₄, A₃PO₄, AH₂AsO₄, A₂HAsO₄, A₃AsO₄, A₄SiO₄, A₄GeO₄, A₂SiO₃, A₂GeO₃ et M₂Si₅O₁₃ dans lesquels A représente un métal alcalin ou alcalino-terreux. Ces composés sont particulièrement intéressants sous forme de sels de lithium (A = Li) : LiHSO₄, Li₂SO₄, LiH₂PO₄, Li₃PO₄, Li₄SiO₄, Li₂SiO₃, Li₂Si₅O₁₃. Les phosphates de sodium NaH₂PO₄, Na₂HPO₄, et Na₃PO₄ sont utiles pour la préparation de fluorophosphate de fer et de sodium.

Les précurseurs des éléments Si et Ge peuvent également être choisis respectivement parmi les fluosilicates et fluogermanates. Ils sont dans ce cas de préférence utilisés en présence de dérivés du bore, à même de former ABF₄ ou BF₃, ABF₄ étant soluble au cours de l'étape iii) et BF₃ étant volatil.

Les précurseurs d'ions fluorure sont choisis parmi les fluorures alcalins d'ammonium, d'imidazolium ou de pyridinium ; les précurseurs d'ions oxydes sont choisis parmi les oxydes, les hydroxydes, les carbonates et les oxalates du métal A ou de leurs complexes avec l'oxalate d'ammonium. Les ions fluorures et les ions oxydes peuvent être introduits seuls ou en mélange avec un ou plusieurs des autres éléments constitutifs de l'oxyde complexe.

La quantité de précurseurs présente dans le liquide support lors de l'étape i) est de préférence de 0,01 % à 85 % en masse, et encore plus préférentiellement de 5 à 60 % en masse.

Le procédé de l'invention peut être mis en oeuvre avantageusement pour la préparation d'une très grande variété d'oxydes inorganiques de formule (I), en choisissant les précurseurs appropriés parmi ceux cités ci-dessus.

Parmi les oxydes inorganiques de formule (I), on peut citer :
- les phosphates AₐMₘPO₄, en particulier les composés AₐM¹ₘPO₄ dans lesquels a = 1 et A = Li ; m varie de 1 à 0,85 et M¹ représente Fe seul ou en combinaison avec au moins un autre élément métallique choisi parmi Mg, Co, Ni, Mn, Al, Cr et Ti ;
- les fluorophosphates AₐMₘPO₄F, en particulier les composés LiMₘPO₄F, par exemple LiFePO₄F ;
- les composés AₐMₘSO₄F, en particulier les composés dans lesquels A et Li ou Na et représente au moins un élément choisi parmi Fe, Mn, Co, et Ni, par exemple LiFeSO₄F, LiCoSO₄F, LiNiSO₄F, Li(Fe₁₋ₜMnₜ)SO₄F, NaFeSO₄F et NaCoSO₄F.

Le fluorosulfate de lithium a une structure tavorite à maille triclinique avec un groupe d'espace *P-1*. Le fluorosulfate de sodium a une structure tavorite à maille monoclinique *P*2*₁*/c.

Un composé AₐMₘSO₄F sous forme d'une phase unique ayant une structure tavorite est obtenu selon le procédé de l'invention à partir d'un précurseur unique pour M et SO₄, à savoir le sulfate monohydrate MSO₄,H₂O. Le monohydrate peut être préparé au préalable par exemple par chauffage sous vide. Il peut aussi être préparé par chauffage après avoir être introduit dans le liquide support dans lequel il réagira ensuite avec les autres précurseurs.

Le procédé de l'invention peut aussi être utilisé pour la préparation des oxydes inorganiques de formule (I) suivants :
- des silicates, par exemple la fayalite et ses solutions solides, en particulier les silicates à structure olivine Fe_{2-x-z}MnₓMg_{w}SiO₄, (0 ≤ x, w ≤ 2), et les silicates mixtes avec le lithium Li₂Fe_{1-x'-w},Mnₓ,Mg_{w},SiO₄ (0 ≤ x', w' ≤ 1) ;
- des sulfates, par exemple Li₂Fe₂(SO₄)₃ et Na₂Fe₂(SO₄)₃ ;
- des silicophosphates, par exemple les composés Na₃₊ₓZr₂(P₁₋ₓSiₓ)₃O₁₂, Li₁₋ₓFe₁₊ₓP₁₋ₓSiₓO₄, Li₁₊ₓFeP₁₋ₓSiₓO₄, Li₂₋ₓFeSi₁₋ₓPₓO₄, et Li₂₋ₓMn_{1-w}Mg_{w}Si₁₋ₓPₓO₄, dans lesquels 0 ≤ x ≤ 1, 0 ≤ w ≤ 1 ;
- des phosphosulfates, par exemple (LiFePO₄)₂)(SO₄) ;
- des silicosulfates, par exemple Li₂₋₂ₓFeSi₁₋ₓSₓO₄, 0 ≤ x ≤ 1 ;
- des phosphosilicosulfates, par exemple LiM²P_{1-x-w}SiₓS_{w}O₄, 0 ≤x, w ≤ 1
- des fluorophosphates mixtes tels que Na₂Fe_{1-x-w}MnₓMg_{w}PO₄F (0 ≤ x ≤ 1 et 0 ≤ w ≤ 0,15) ou LiVPO₄(O₁₋ₓFₓ) et NaVPO₄(O₁₋ₓF₋ₓ) avec 0 ≤ x ≤ 1, des fluorophosphates tels que MPO₄F avec M = Fe, Mn ou Al.

Selon une forme de réalisation préférée de l'invention, les cations du liquide ionique sont choisis parmi les cations de formules suivantes :

| | | | |
|---|---|---|---|
| 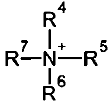 | 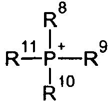 | 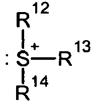 | 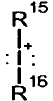 |
| ammonium | phosphonium | sulfonium | iodonium |
| 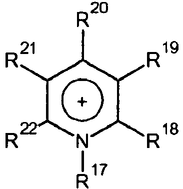 | 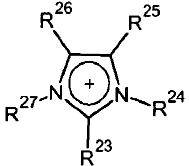 | 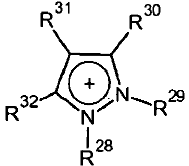 | 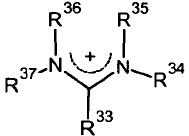 |
| pyridinium | imidazolium | pyrazolium | acétamidinium |
| 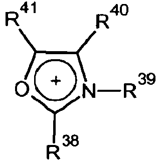 | 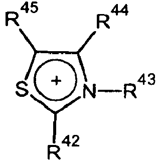 | 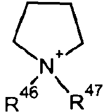 | 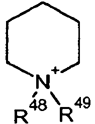 |
| oxazolium | thiazolium | pyrrolidinium | pipéridinium |
| 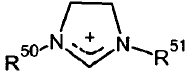 | 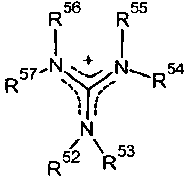 | | |
| imidazolinium | guanidinium | | |

dans lesquelles :
- les radicaux R⁴-R¹⁷, R²⁷, R²⁴, R²⁸, R²⁹, R³⁷, R³⁴, R³⁹, R⁴³ et R⁴⁶ à R⁵⁷, indépendamment les uns des autres, représentent un radical alkyle en C₁-C₂₄, arylalkyle en C₁-C₂₄ ou alkyl(C₁-C₂₄)aryle.
- les radicaux R¹⁸ à R²², R²³, R²⁵, R²⁶, R³⁰ à R³³, R³⁵, R³⁶, R³⁸, R⁴⁰ à R⁴², R⁴⁴ et R⁴⁵ représentent un atome d'hydrogène, un radical alkyle en C₁-C₂₄, aryle, oxaalkyle en C₁-C₂₄ ou un radical [(CH)₂]ₘQ dans lequel Q représente OH, CN, C(=O)OR⁵⁸, C(=O)NR⁵⁹R⁶⁰, NR⁶¹R⁶², ou bien un radical 1-imidazoyle, 3-imidazoyle ou 4-imidazoyle et m est un nombre entier positif compris entre 0 et 12 inclusivement ;
- les radicaux R⁸ à R¹⁶ peuvent également désigner un radical alkyl(C₁-C₂₀)aryle ou un groupement NR⁶³R⁶⁴,
- R⁵⁸ à R⁶⁴, indépendamment les uns des autres, représentent un atome d'hydrogène, un radical alkyle en C₁-C₁₀, aryle ou oxaalkyle en C₁-C₂₀.

Les anions des liquides ioniques sont de préférence choisis parmi : Cl, Br, I, RSO₃⁻, ROSO₃⁻, [RPO₂]⁻, [R(R'O)PO₂]⁻, [(RO)₂PO₂]⁻, BF₄⁻, R_{f}BF₃⁻, PF₆⁻, R_{f}PF₅⁻, (R_{f})₂PF₄⁻, (R_{f})₃PF₃⁻, R_{f}CO₂^{-,} R_{f}SO₃⁻, [(R_{f}SO₂)₂N], [(R_{f}SO₂)₂CH]⁻, [(R_{f}SO₂)₂C(CN)]⁻, [R_{f}SO₂C(CN)₂]⁻, [(R_{f}SO₂)₃C]⁻, N(CN)₂⁻, C(CN)₃⁻, [(C₂O₄)₂B]⁻ dans lesquels :
- R et R', identiques ou différents, représente un radical alkyle en C₁-C₂₄, aryle ou alkyl(C₁-C₂₄)aryle,
- R_{f} est un radical fluoré choisi parmi CₙF₂ₙ₊₁ dans lequel 0 ≤ n ≤ 8, CF₃OCF₂, HCF₂CF₂ et C₆F₅.

Dans un mode de réalisation particulier, le liquide ionique de l'invention comprend une partie polycationique organique associée au nombre d'anions requis pour assurer l'électroneutralité du composé. La partie polycationique comprend au moins deux unités récurrentes qui portent chacune un groupe cationique. Selon une variante, l'unité récurrente de la partie polycationique peut être une unité portant un groupe latéral cationique, par exemple l'un des cations ci-dessus dans lequel l'un des groupes R est un biradical de liaison avec l'unité récurrente formant la chaîne du groupe polycationique. Selon une autre variante, les groupes cationiques font partie de la chaîne du groupe polycationique, deux substituants R sur un groupe cationique étant des biradicaux qui forment une liaison avec des groupes cationiques adjacents.

A titre d'exemple de liquide ionique, on peut tout particulier citer le trifluorométhanesulfonate de 1-éthyl-3-méthylimidazolium (EMI-triflate), le bis-(trifluorométhanesulfonyl)imide de 1-éthyl-3-méthylimidazolium (EMI-TFSI), le trifluorométhanesulfonate de N-méthyl-N-propyl-pyrrolidinium, le trifluorométhanesulfonate de N-méthyl-N-butyl-pyrrolidinium, le trifluorométhanesulfonate de N-méthyl-N-propyl-pipéridinium,le trifluorométhanesulfonate de N-méthyl-N-propyl-pyrrolidinium, le trifluorométhanesulfonate de N-méthyl-N-butyl-pipéridinium, le bis-(trifluorométhanesulfonyl)imide de N-méthyl-N-propyl-pyrrolidinium,le bis-(trifluorométhanesulfonyl)imide de N-méthyl-N-butyl-pyrrolidinium, le bis-(trifluorométhanesulfonyl)imide de N-méthyl-N-propyl-pipéridinium, le bis-(trifluorométhanesulfonyl)imide de N-méthyl-N-propyl-pyrrolidinium, le bis-(trifluorométhanesulfonyl)imide de N-méthyl-N-butyl-pipéridinium, le bis-(trifluorométhanesulfonyl)imide de N-méthyl-N-butyl-pyrrolidinium, le bis-(trifluorométhanesulfonyl)imide de 1,3-diméthylimidazolium, le bis-(trifluorométhanesulfonyl)imide 1-éthyl-3-méthylimidazolium, le bis-(trifluorométhanesulfonyl)imide 1-propyl-3-méthylimidazolium, le bis-(trifluorométhanesulfonyl)imide 1-butyl-3-méthylimidazolium, le bis-(trifluorométhanesulfonyl)imide 1-hexyl-3-méthylimidazolium, le bis-(trifluorométhanesulfonyl)-mide 1-décyl-3-méthylimidazolium, le bis-(trifluorométhanesulfonyl)imide 1-dodécyl-3-méthylimidazolium, le bis-(trifluorométhanesulfonyl)imide 1-tetradécyl-3-méthylimidazolium, le bis-(trifluorométhanesulfonyl)imide 1-hexadécyl-3-méthylimidazolium, le bis-(trifluorométhanesulfonyl)imide 1-octadécyl-3-méthyl-imidazolium, le bis-(trifluorométhanesulfonyl)imide 1-2-diméthyl-3-propyl-imidazolium,le trifluorométhanesulfonate de 1,3-diméthylimidazolium, le trifluorométhanesulfonate de 1-éthyl-3-méthylimidazolium, le trifluorométhanesulfonate de 1-propyl-3-méthylimidazollum, le trifluorométhanesulfonate de 1-butyl-3-méthylimidazolium, le trifluorométhanesulfonate de 1-hexyl-3-méthylimidazolium, le trifluorométhanesulfonate de 1-décyl-3-méthylimidazolium, le trifluorométhanesulfonate de 1-dodécyl-3-méthylimidazolium, le trifluorométhanesulfonate de 1-tetradécyl-3-méthylimidazolium, le trifluorométhanesulfonate de 1-hexadécyl-3-méthylimidazolium, le trifluorométhanesulfonate de 1-octadécyl-3-savoir le but propylimidazolium et leurs mélanges.

Le liquide ionique utilisé lors de l'étape i) peut en outre renfermer un ou plusieurs précurseurs de carbone choisis parmi les hydrates de carbone simples tels que les sucres et les hydrates de carbone polymérisés tels que l'amidon et la cellulose. Lorsqu'ils sont utilisés, ces précurseurs de carbone permettent de conférer aux oxydes inorganiques de l'invention une conductivité de surface. En effet, les précurseurs de carbone sont solubles dans les liquides ioniques et vont se répartir à la surface des particules d'oxyde. L'étape de chauffage engendre un début de carbonisation et peut dans ce cas être poursuivie au-delà de 380°C (par exemple jusqu'à 700°C), de préférence sous atmosphère inerte, pour augmenter la conductivité de surface de l'oxyde.

Selon un mode de réalisation préféré de l'invention, la température de chauffage de la suspension lors de l'étape ii) est comprise entre 100 et 350°C, et encore plus préférentiellement entre 150 et 280°C.

Selon un mode de réalisation préféré, l'étape ii) de chauffage est effectuée sous atmosphère inerte, à la pression atmosphérique. En effet, un des avantages importants du procédé conforme à l'invention est de ne pas requérir d'enceinte sous pression du fait de l'absence de volatilité du ou des liquides ioniques. L'étape ii) peut même être effectuée en continu, dans une enceinte chauffée et dans laquelle circulent le liquide ionique et les précurseurs de l'oxyde inorganique de formule (I), avec un temps de résidence permettant à la réaction d'être totale.

La durée de l'étape ii) de chauffage varie généralement de 10 minutes à 200 heures, préférentiellement de 3 à 48 heures.

La séparation du composé inorganique de formule (I) lors de l'étape iii) peut être réalisée par toute technique connue de l'homme du métier telle que par exemple par extraction par un solvant du liquide ionique ou par centrifugation et élimination des éventuels sous-produits par de l'eau ou un alcool ayant de 1 à 6 atomes de carbone.

A la fin de la synthèse, le composé inorganique de formule (I) peut être lavé, par exemple à l'eau et/ou avec un solvant organique tel que par exemple l'acétone, puis utilisé sans purification supplémentaire.

Egalement à la fin de la synthèse, le liquide ionique peut être récupéré et lavé, de préférence par une solution acide telle que par exemple une solution aqueuse d'acide chlorhydrique, d'acide sulfurique ou d'acide sulfamique. Le lavage peut en outre être effectué par de l'eau, lorsque le composé (I) n'est pas un fluorosulfate. Après lavage, et séchage (par exemple au Rotavapor®) ou sous vide primaire, le liquide ionique peut ainsi être réutilisé pour une nouvelle synthèse, ce qui est très avantageux d'un point de vue économique.

De manière classique, les oxydes inorganiques de formule (I) peuvent être utilisés dans diverses applications en fonction des éléments qui les constituent. A titre d'exemple, les oxydes inorganiques de formule (I) de l'invention peuvent être utilisés comme composants pour la fabrication d'électrodes, comme céramiques, comme matériaux magnétiques pour le stockage l'information, ou bien encore comme pigment.

La présente invention est illustrée par les exemples de réalisation suivants, auxquels elle n'est cependant pas limitée.

Dans les exemples, sauf mention contraire, FeSO₄.H₂O a été préparé à partir de FeSO₄.7H₂O par chauffage sous vide à 200°C, ou par chauffage de FeSO₄.7H₂O dans le liquide ionique EMI-TFSI à 250°C pendant 2 heures.
Les figures 1-2 représentent le diagramme de diffraction des rayons X du matériau LiFePO₄ obtenu respectivement dans les exemples 1-2.
Les figures 3 à 4 représentent le diagramme de diffraction des rayons X pour les matériaux Na₂FePO₄F des exemples 5 et 6.
Les figures 5 à 9 représentent le diagramme de diffraction des rayons X pour les matériaux Na₂MnPO₄F, Na₂Fe_{0,95}Mn_{0,5}PO₄, LiFePO₄F, NaFeSO₄F, LiTiPO₄F obtenus respectivement dans les exemples 7 à 11.
Les figures 10a et 10b concernent une cellule au lithium, et les figures 11a et 11b concernent une cellule au sodium contenant le matériau de l'invention selon l'exemple 5 (figures a) et le matériau selon l'invention de l'exemple 6 (figures b). Sur chacune des figures, la variation du potentiel P (en V) est donnée en fonction de la teneur x en métal alcalin pendant les deux premiers cycles. L'insert représente l'évolution de la capacité C (en mAh/g) en fonction du nombre de cycles N.
La figure 12 représente l'image obtenue par SEM pour le matériau LiFeSO₄F de l'exemple 13.
La figure 13a représente l'image TEM, plus particulièrement le diagramme SAED correspondant, pour le matériau LiFeSO₄F de l'exemple 13 et la figure 13b représente le spectre EDS qui montre la présence de F. L'intensité est donnée en ordonnée (en unités arbitraires) en fonction de l'énergie E (en keV) en abscisse.
La figure 14 représente le diagramme de diffraction des rayons X et, sous forme d'un insert, la structure du matériau LiFeSO₄F de l'exemple 13.
La figure 15 représente le diagramme obtenu lors de la caractérisation par ATG couplée avec une spectrométrie de masse, du matériau LiFeSO₄F de l'exemple 13.
La figure 16 représente l'évolution du diagramme de diffraction des rayons X lors de l'augmentation de la température pour un matériau LiFeSO₄F.
La figure 17 représente de diagramme de diffraction des rayons X pour un mélange équimolaire de FeSO₄ anhydre et de LiF avant traitement thermique (fig. 17a) et après traitement thermique sous air à 450°C pendant 15 minutes (fig. 17b).
Les figures 18 à 21 représentent le diagramme de diffraction des rayons X respectivement pour les exemples 15 à 18.
Les figures 22 et 23 représentent le diagramme de diffraction des rayons X et le diagramme obtenu lors de la caractérisation par ATG du matériau LiCoSO₄F de l'exemple 19.
La figure 24 représente l'évolution du diagramme de diffraction des rayons X lors de l'augmentation de la température, pour un échantillon de LiCoSO₄F.
Les figures 25 et 26 représentent respectivement le diagramme de diffraction des rayons X et le diagramme obtenu lors de la caractérisation par ATG du matériau LiNiSO₄F de l'exemple 20.
La figure 27 représente l'évolution du diagramme de diffraction des rayons X lors de l'augmentation de la température, pour un échantillon de LiNiSO₄F.
Les figures 28 et 29 représentent le diagramme de diffraction des rayons X respectivement de la solution solide Fe_{0,5}Mn_{0,5}SO₄.H₂O de l'exemple 21 et du composé FeSO₄F de l'exemple 22.
Les figures 30 à 32 correspondent à un composé de l'exemple 16. Sur la figure 30, la courbe principale représente la variation du potentiel en fonction du taux d'insertion x du lithium, lors du cyclage de la cellule à un régime de C/10, et l'insert représente l'évolution de la capacité de la cellule en fonction du nombre de cycle N. La figure 31 représente la variation du potentiel en fonction du taux d'insertion x du lithium, lors du cyclage de la cellule à un régime de C/2. La figure 32 représente la variation de la capacité en fonction du régime de cyclage R.

Sur les diagrammes de diffraction des rayons X, l'intensité I (en unités arbitraires) est donnée en ordonnée, et la longueur d'onde 29 est donnée en abscisse.

### Exemple 1

### Synthèse de LiFePO₄ dans le liquide ionique bis-(trifluorométhanesulfonyl) imide de 1-éthyl-3-méthylimidazolium

Dans cet exemple, la synthèse de LiFePO₄ a été réalisée par précipitation dans un ballon de 50 ml.

Dans 1 ml de bis-(trifluorométhanesulfonyl) imide de 1-éthyl-3-méthylimidazolium (ou EMI-TFSI) (fourni par la société Solvionic) contenant 2 ml de 1,2-propanediol et 0,5 g d'urée, on a ajouté 0,524 g de LiH₂PO₄ à 99% (Aldrich) et 1 g de FeCl₂.4H₂O. Après 10 minutes d'agitation, le mélange (suspension) a été porté à une température de 180°C avec une rampe de montée en température de 1 °C/minute. La température a été maintenue à 180°C pendant 10 heures, puis le milieu réactionnel a été refroidi jusqu'à la température ambiante. Après récupération par filtration, la poudre de LiFePO₄ est lavée avec 5 ml d'acétone, ensuite avec 2 fois 50 ml d'eau distillée, enfin avec 5 ml d'acétone et séchée dans une étuve à 60 °C. On obtenu 1, g de LiFePO₄ avec un rendement de 95%.

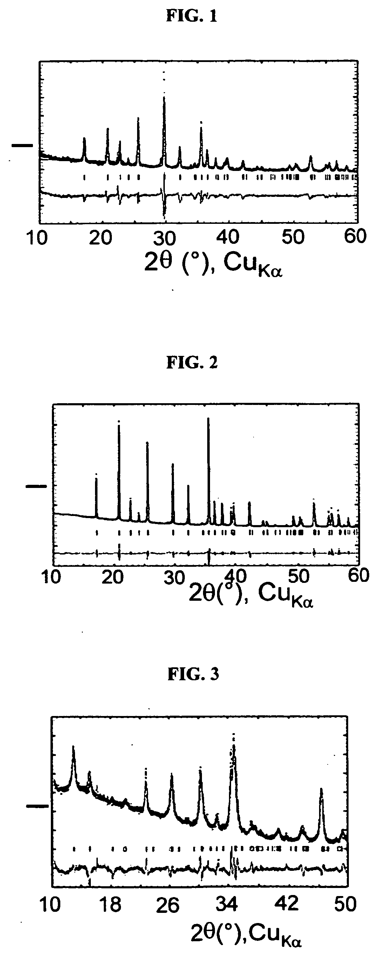

Le composé ainsi obtenu a ensuite été analysé par diffraction de Rayons X (RX) avec une cathode de cuivre. Le diffractogramme correspondant est représenté sur la figure 1 annexée. Il montre que l'oxyde inorganique LiFePO₄ est une phase unique qui présente une structure orthorhombique. La morphologie du LiFePO₄ ainsi obtenu est la suivante :
SG : Pnma (62)
a = 10,33235 (5) Å ; b = 6,00502 (6) Å ; c = 4,69804 (3) Å

Le liquide ionique ayant servi à la synthèse de l'oxyde LiFePO₄ a ensuite été récupéré et lavé avec 50 ml d'eau, puis avec 2 fois 50 ml d'une solution d'acide chlorhydrique d'une concentration de 2 mol/l, et enfin avec 50 ml d'eau puis séché au Rotavapor®.

### Exemple 2

### Synthèse de LiFePO₄ dans le liquide ionique EMI-TFSI

La synthèse de LiFePO₄ a été réalisée par précipitation dans un ballon de 50 ml. Dans 15 ml de EMI-TFSI, on a ajouté 0,524 g de LiH₂PO₄ à 99% (Aldrich) et 0,908 g de Fe(C₂O₄).2H₂O. Après 10 minutes d'agitation, la suspension a été portée à une température de 250°C avec une rampe de montée en température de 1 C/minute. La température du milieu réactionnel a été maintenue à 250°C pendant 24 heures, puis le milieu a été refroidi jusqu'à la température ambiante. Après récupération par filtration, la poudre de LiFePO₄ a été lavée avec 50 ml d'acétone, puis avec 2 fois 50 ml d'eau distillée, et enfin avec 50 ml d'acétone et séchée dans une étuve à 60°C. On a obtenu 1,53 g de LiFePO₄ avec un rendement de 97%.

Le composé ainsi obtenu a ensuite été analysé par diffraction RX avec une cathode de cuivre. Le diffractogramme correspondant est représenté sur la figure 2 annexée. Il montre que l'oxyde inorganique LiFePO₄ est une phase unique qui présente la même structure orthorhombique que l'échantillon obtenu selon l'exemple 1.

Le liquide ionique a été récupéré de la même manière que dans l'exemple 1.

### Exemple 3

### Synthèse de LiFePO₄ dans le EMI-TFSI en présence de traces de bis-(trifluorométhanesulfonyl)imide 1-tetradécyl-3-méthylimidazolium

La synthèse de LiFePO₄ a été réalisée dans une bombe. Dans 10 ml d'EMI-TFSI contenant des traces de bis-(trifluorométhanesulfonyl)imide 1-tetradécyl-3-méthylimidazolium (utilisé à titre de tensioactif pour modifier la forme des particules), on a ajouté 5.10⁻³ mol de LiH₂PO₄ et 5.10⁻³ mol de Fe(C₂O₄).2H₂O. Après agitation, le mélange réactionnel a été porté à une température de 250°C avec une rampe de montée en température de 1°C/min. La température du milieu réactionnel a été maintenue à 250°C pendant 24 heures, puis le milieu a été refroidi jusqu'à la température ambiante. Après récupération, lavage et séchage comme indiqué ci-dessus à l'exemple 2, on a obtenu le produit attendu. L'analyse par diffraction RX a montré une seule phase de LiFePO₄.

### Exemple 4

### Synthèse de LiFePO₄ dans le trifluorométhanesulfonate de 1-éthyl-3-méthylimidazolium- (EMI-triftate) contenant des traces de bis-(trifluorométhanesulfonyl)imide 1-tetradécyl-3-méthylimidazolium

La synthèse de LiFePO₄ a été réalisée dans une bombe. Dans 10 ml d'EMI-triflate contenant des traces de bis-(trifluorométhanesulfonyl)imide 1-tetradécyl-3-méthylimidazolium (utilisé à titre de tensioactif pour modifier la forme des particules), on a ajouté 5.10⁻³ mol de LiH₂PO₄ et 5.10⁻³ mol de Fe(C₂O₄).2H₂O. Après agitation, le mélange réactionnel a été porté à une température de 250°C avec une rampe de montée en température de 1°C/min. La température du milieu réactionnel a été maintenue à 250°C pendant 24 heures, puis le milieu a été refroidi jusqu'à la température ambiante. Après récupération, lavage et séchage comme indiqué ci-dessus à l'exemple 2, on a obtenu le produit attendu. L'analyse par diffraction RX a montré une seule phase de LiFePO₄.

### Exemple 5

### Synthèse de Na₂FePO₄F à partir de FeF₂ et de Na₃PO₄

On a introduit 1g de mélange équimolaire FeF₂ / Na₃PO₄ (obtenu par un broyage de 10 minutes) dans 5 ml de 1-butyl-2,3-dimethylimidazolium bis(trifluoromethanesulfonyl)imide. On a chauffé le mélange à 270°C pendant 48 h, puis on a laissé refroidir jusqu'à la température ambiante. La poudre récupérée après filtration est lavée avec 20 ml d'acétone pour éliminer les traces de liquide ionique, rincée rapidement avec l'eau froide pour éliminer les traces de NaF formé au cours de la synthèse, lavée avec 20 ml d'acétone, puis séchée dans l'étuve à 60°C.

La figure 3 représente le diffractogramme de RX du composé obtenu selon le schéma réactionnel FeF₂ + Na₃PO₄ → Na₂FePO₄F + NaF. Elle montre que ledit composé est une phase unique orthorhombique dont les paramètres sont : SG: P b c n (60); a= 5.20681 (4) Å; b= 13.58217 (2) Å; c = 11.69389 (2) Å.

Le composé Na₂FePO₄F est obtenu sous forme de particules qui ont une dimension moyenne de 20 à 50 nm.

### Exemple 6

### Préparation de Na₂FePO₄F à partir de FeF₂, FeCl₂ et Na₃PO₄

On a reproduit le mode opératoire de l'exemple 5, en utilisant 1g de mélange équimolaire de ½ FeF₂, ½ FeCl₂ et Na₃PO₄ en tant que mélange de précurseurs.

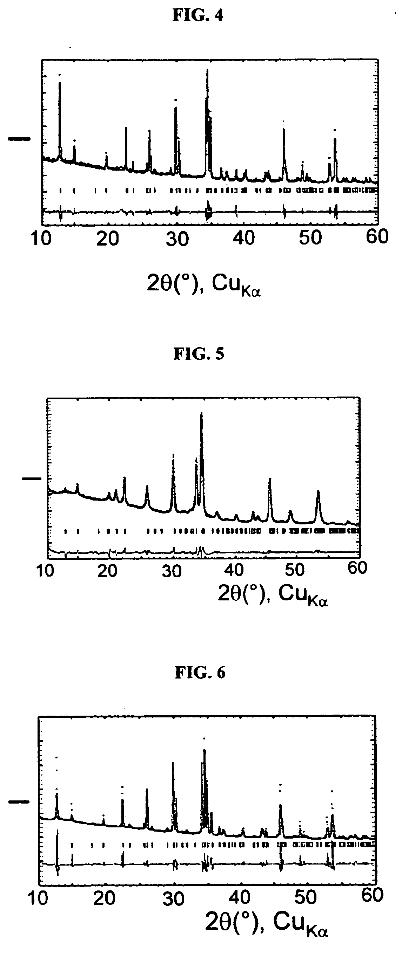

La figure 4 représente le diffractogramme de RX du composé obtenu selon le schéma réactionnel 1/2FeF₂ + 1/2FeCl₂, + Na₃PO₄ → Na₂FePO₄F + NaCl. Elle montre que ledit composé est une phase unique orthorhombique dont les paramètres sont : SG: P b c n (60); a= 5.22576 (4) Å; b= 13.86986 (2) Å; c = 11.79141 (2) Å.

Le composé Na₂FePO₄F est obtenu sous forme de particules qui ont une dimension moyenne de 1 à 3 µm.

### Exemple 7

### Synthèse de Na₂MnPO₄F à partir de MnF₂ et Na₃PO₄

On a reproduit le mode opératoire de l'exemple 1, en utilisant 1g de mélange équimolaire de MnF₂ / Na₃PO₄ en tant que mélange de précurseurs.

La figure 5 représente le diffractogramme de RX du composé obtenu selon le schéma réactionnel MnF₂ + Na₃PO₄ → Na₂MnPO₄F + NaCl. Elle montre que ledit composé est une phase unique monoclinique dont les paramètres sont : SG: P 121/N1 (14) ; a= 13.69172 (4) Å; b= 5.30686 (2) Å; c = 13.70873 (4) Å; β= 119.67074°.

### Example 8

### Synthèse de Na₂Fe_{0.95}Mn_{0.05}PO₄F à partir de FeF₂, FeCl₂, MnF₂, et Na₃PO₄

On a reproduit le mode opératoire de l'exemple 6, en utilisant 1g de mélange équimolaire 0,5 FeF₂, 0,45 FeCl₂, 0,05MnF₂, et Na₃PO₄ en tant que mélange de précurseurs et en modifiant le lavage.

La poudre formée et récupérée par filtration est lavée à l'acétone pour éliminer les traces de liquide ionique, puis 2 fois avec 20 ml de méthanol pour éliminer le NaCl formé au cours de la synthèse, puis avec 20 ml d'acétone et ensuite séchée dans l'étuve à 60°C.

La figure 6 représente le diffractogramme de RX du composé obtenu selon le schéma réactionnel

0,5 FeF₂ + 0,45 FeCl₂ + 0,05 MnCl₂ + Na₃PO₄ → Na₂Fe_{0,95}Mn_{0,05}PO₄F + NaCl

La figure 6 montre que ledit composé est une phase unique orthorhombique dont les paramètres sont : SG: P b c n (60); a= 5.24863 (4) Å; b= 13.85132 (3) Å; c = 11.79877 (4) Å.

### Exemple 9

### Synthèse de LiFePO₄F à partir de FeF₃ et de Li₃PO₄

On a introduit 1g de mélange équimolaire FeF₃ / Li₃PO₄ (obtenu par un broyage de 30 minutes) dans 5 ml de trifluorométhanesulfonate de 1-butyl-3-methylimidazolium. On a chauffé le mélange à 260°C pendant 48 h, puis on a laissé refroidir jusqu'à la température ambiante. La poudre récupérée après filtration est lavée avec 20 ml d'acétone pour éliminer les traces de liquide ionique, rincée rapidement avec l'eau froide pour éliminer les traces de LiF formé au cours de la synthèse, lavée avec 20 ml d'acétone, puis séchée dans l'étuve à 60°C.

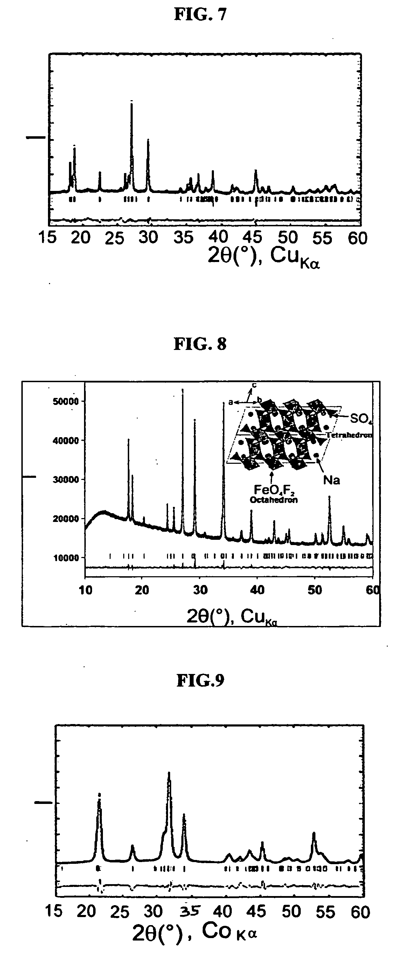

Le diffractogramme de RX représenté sur la figure 7 est celui du composé obtenu selon le schéma réactionnel FeF₃ + Li₃PO₄ → LiFePO₄F + 2 LiF montre que ledit composé est une phase unique triclinique groupe d'espace P-1(2) dont les paramètres sont : a= 5.15616Å, b= 5.31041 Å, c= 7.48189 Å, α= 67.22507, β= 67.33746, γ= 81.74728°, V=174.303 Å³.

### Exemple 10

### Synthèse de NaFeSO₄F à partir de FeSO₄.7H₂O et de NaF

On introduit dans une bombe Parr® ouverte, un mélange de 5 ml d'EMI-TFSI et de 2,808g de FeSO₄.7H₂O et on chauffe à 230°C. Après 5 h de chauffage, on refroidit le mélange jusqu'à température ambiante, puis on ajoute 0,42 g de NaF avant de fermer la bombe Parr^{®}. Après 10 minutes d'agitation magnétique, le mélange est chauffé à 250°C pendant 24 heures. Après refroidissement à température ambiante, la poudre récupérée est lavée deux fois avec 20 ml d'acétone, puis séchée à l'étuve à 60°C. Le diagramme de diffraction des rayons X, représenté sur la figure 8, montre la formation d'une nouvelle phase cristalisée dans une maille monoclinque, de groupe d'espace P2₁/c, avec les paramètres de maille : **a = 6.6798(2)** Å, **b = 8,7061(2) Å, c = 7.19124(18) Å, β = 113,517(2) °, et V = 383,473(18) Å³.**

### Exemple 11

### Synthèse de LiTiPO₄F

Elle est effectuée dans une bombe Parr® à 260°C. Le facteur limitant dans la synthèse de LiTiPO₄F est la température de réaction. Pour avoir une réaction complète avec les liquides ioniques classiques, il faut des températures supérieures à 300°C. Cependant, les matériaux fluorés se décomposent à partir de 280°C. L'utilisation d'un liquide ionique protégé par un groupe CH₃ sur la position 2 en présence d'un groupement OH (hydroxy) permet de diminuer la température de la réaction par l'augmentation de la solubilité des précurseurs.

Dans 5 ml de bis(trifluoromethanesulfonyl)imide de 1,2-diméthyl-(3-hydroxypropyl)-imidazolium, on ajoute 1 g de mélange équimolaire de TiF₃ et Li₃PO₄ préparé par un broyage de 30 minutes. Après 20 minutes d'agitation, le mélange est chauffé à 260°C pendant 48 h, puis refroidi jusqu'à la température ambiante. La poudre récupérée par filtration est lavée avec 20 ml d'acétone pour éliminer les traces de liquide ionique, rincée avec l'eau froide pour éliminer les traces de LiF formé au cours de la synthèse, lavée avec 20 ml d'acétone, puis séchée dans l'étuve à 60°C.

La figure 9 représente le diffractogramme de RX du composé LiTiPO₄F obtenu selon le schéma réactionnel TiF₃ + Li₃PO₄ → LiTiP04F + 2LiF. Elle montre que ledit composé est une phase unique triclinique groupe d'espace P-1(2) dont les paramètres sont : a= 5.24979 Å, b= 5.31177 Å, c= 7.43029 Å; α= 68.07435 °, β= 68.01394 °, γ= 83.37559 ° V=178.161 Å³.

Le composé est sous forme de particules nanométriques.

### Exemple 12

On a évalué les performances des composés obtenus par le procédé décrit dans les exemples 5 et 6.

Chacun des matériaux a été utilisé comme matériau de cathode d'une part dans une cellule électrochimique "au lithium", et d'autre part dans une cellule électrochimique "au sodium". Le cyclage a été effectué à un régime de C/15, dans lequel un électron est échangé en 15 heures.

La cellule "au lithium" comprend :
- une anode constituée par un feuille de lithium métallique ;
- un électrolyte constitué par une solution 1 M de LiPF₆ dans un mélange 1/1 massique de carbonate d'éthyle et de carbonate de diméthyle ;

La cellule "au sodium" comprend :
- une anode constituée par du sodium métallique appliqué sur un disque en acier ;
- un électrolyte constitué par une solution 1 M de NaClO₄ dans le carbonate de propylène

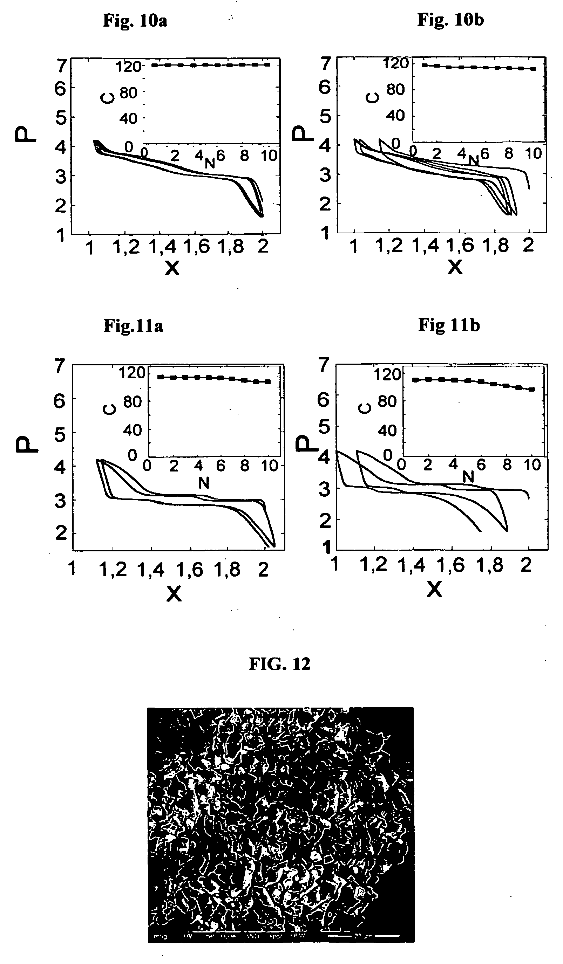

Les figures 10a et 10b concernent les cellules "au lithium", et les figures 11aet 11b concernent les cellules "au sodium"., les figures a concernent le matériau de l'invention selon l'exemple 5 et les figures b concernent le matériau selon l'invention de l'exemple 6.

Sur chacune des figures, la variation du potentiel P (en V) est donnée en fonction de la teneur x en métal alcalin pendant les deux premiers cycles (pour le composé (Li,Na)ₓFePO₄F sur les figures 10, pour le composé NaₓFePO₄F sur les figures 11). L'insert représente l'évolution de la capacité C (en mAh/g) en fonction du régime de cyclage R.

### Exemple 13

### Préparation de LiFeSO₄F

### Synthèse

Dans une étape préliminaire, on a soumis FeSO₄.7H₂O à un traitement thermique dans EMI-TFSI à 250°C pendant 10 h, puis a 280°C pendant 24 h. Le monohydrate FeSO₄.H₂O formé est récupéré par centrifugation, lavé à l'acétate d'éthyle puis et séchage sous vide à 100°C.

On a mélangé 0,85 g de FeSO₄.H₂O ainsi obtenu et 0,148 g de LiF (rapport molaire 1/1,14) dans un mortier, on a introduit le mélange dans une bombe Parr® et on a ajouté 5 mL de bis(trifluorométhanesulfonyl) imidure d'éthyl-méthylimidazolium (EMI-TFSI). On a agité pendant 20 min à température ambiante, on a laissé décanter pendant 2 h, puis on a chauffé à 300°C pendant deux heures, dans la bombe ouverte, sans agitation.

Après refroidissement du mélange réactionnel jusqu'à la température ambiante, on a séparé la poudre obtenue par centrifugation, on l'a lavée 3 fois avec 20 mL de dichlorométhane, puis on l'a séchée à l'étuve à 60°C.

Le produit obtenu se présente sous forme d'une poudre couleur vert pâle. Il a été soumis à diverses analyses.

### Analyse SEM

La figure 12 représente l'image obtenue par SEM et montre que la poudre est sous forme d'agglomérats constitués par des particules micrométriques.

### Analyse TEM

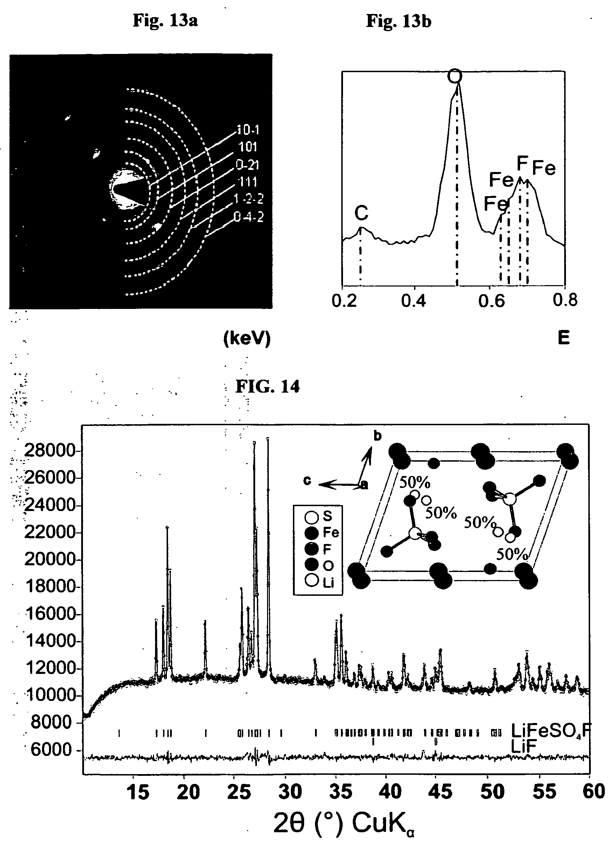

La figure 13a représente l'image TEM, plus particulièrement le diagramme SAED correspondant, et elle montre que les particules sont constituées par de nombreux cristallites. La figure 13b représente le spectre EDS qui montre la présence de F. L'intensité est donnée en ordonnée (en unités arbitraires) en fonction de l'énergie E (en keV) en abscisse.

### Diffraction des rayons X

La figure 14 représente le diagramme de diffraction des rayons X et, sous forme d'un insert, la structure du compose obtenu. Cette structure comprend des d'octaèdres indépendants FeO₄F₂, des tétraèdres SO₄ avec des tunnels dans lesquelles se trouvent les ions Li⁺.

### Analyse thermogravimétrique (ATG)

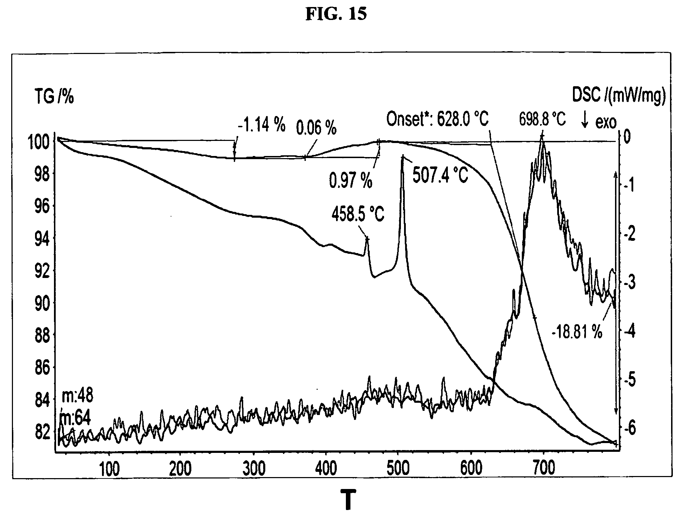

La figure 15 représente le diagramme obtenu lors de la caractérisation du composé par ATG couplé avec une spectrométrie de masse. La courbe supérieure (qui porte les mentions -1.14%, 0.07%, ...) correspond à l'analyse ATG, la courbe médiane (qui porte les mentions 458.5°C et 507.4°C) correspond à la calorimétrie différentielle à balayage (DSC), et la courbe inférieure (portant les mentions m48 et m64) correspond à la spectrométrie de masse. Ces courbes montrent qu'une perte de poids de 23,41% se produit entre 400°C et 700°C, correspondant à un départ de SO₂ qui sous l'impact électronique dans les spectromètres de masse se fragmente partiellement en SO. Les accidents dans la courbe ATG et DSC pour des températures supérieures à 350°C indiquent, le début d'instabilité thermique du composé.

Les analyses DSC et ATG montrent ainsi qu'il n'est pas possible d'obtenir LiFeSO₄F par un procédé par voie céramique effectué à des températures supérieures à 400°C tel que décrit dans US-2005/0163699.

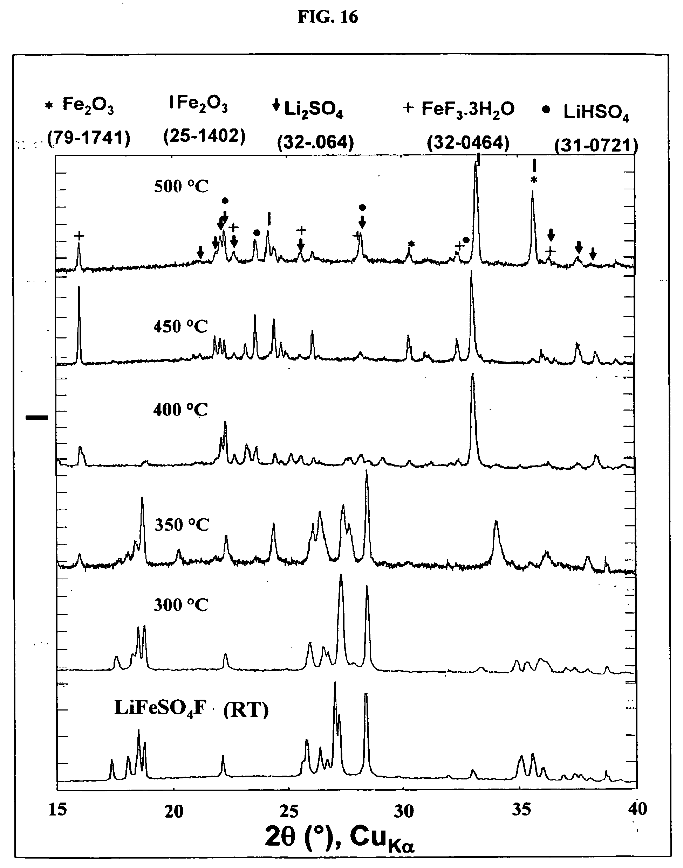

Pour confirmer ce fait, un échantillon du produit obtenu dans le présent exemple a été chauffé à l'air pendant 30 minutes comme dans US-2005/0163699. La figure 16 représente l'évolution du diagramme de diffraction des rayons X lors de l'augmentation de la température. Les raies visibles à 500°C sont attribuées aux composés existant à cette température, en référence aux numéros des Fiches JCPDS correspondant aux matériaux identifiés) comme suit :
* Fe₂O₃ (79-1741)
| Fe₂O₃ (25-1402)
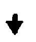 Li₂SO₄ (32-064) + FeF₃.3H₂O (32-0464)
• LiHSO₄ (31-0721)

### Exemple 14 comparatif

On a préparé un mélange équimolaire de FeSO₄ anhydre et de LiF et on l'a chauffé sous air à 450°C pendant 15 minutes.

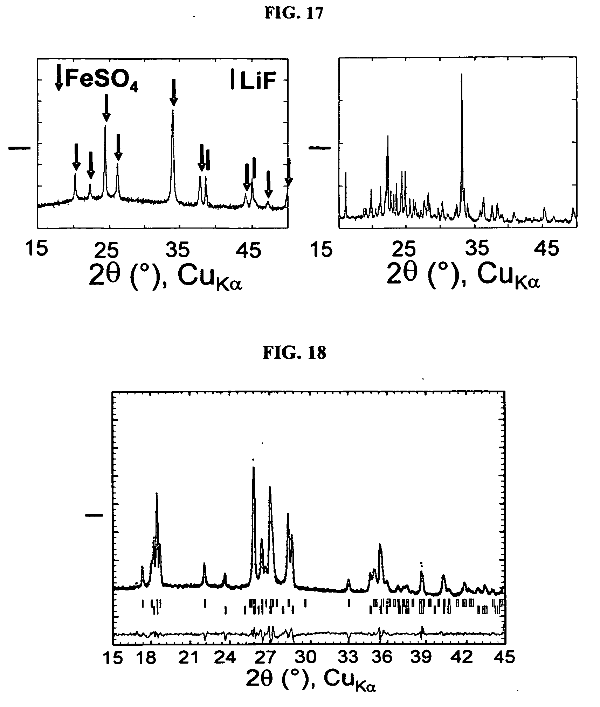

La figure 17 représente de diagramme de diffraction des rayons X pour le mélange de réactifs de départ (fig. 17a) et pour le produit obtenu après le traitement thermique (fig. 17b). Les pics qui correspondent respectivement à FeSO₄ et à LiF sont visibles sur la figure 17a, alors que la figure 17b montre des pics correspondant respectivement à LiF, Li₂SO₄, Fe₂O₃ et Li₂S₂O₇.

Cet exemple confirme que le traitement par voie céramique d'un mélange de précurseur de Fe et de S, et d'un précurseur de F ne donne pas le composé LiFeSO₄F, contrairement à ce qui est affirmé dans US-2005/0163699.

### Exemple 15

### Synthèse de LiFeSO₄F à partir de FeSO₄.7H₂O et LiF dans EMI-TFSI

Dans un flacon en PTFE contenant 3 ml de bis(trifluorométhane-sulfonyl)imide de 1-éthyl-3-méthylimidazolium (EMI-TFSI), on a introduit un mélange de 1,404 g de FeSO₄.7H₂O et 0,149 g de LiF préparé dans un mortier, on a soumis le mélange à une agitation magnétique pendant 20 minutes à température ambiante, on a arrêté l'agitation, puis on a ajouté 2 ml de liquide ionique (EMI-TFSI), et on a maintenu le mélange sans agitation à température ambiante pendant 30 minutes. L'ensemble a ensuite été introduit dans un four à 200°C, la température du four a été augmentée de 10°C toutes les 20 minutes jusqu'à 275°C, maintenue à cette valeur pendant 12 heures, puis on a laissé refroidir lentement.

La poudre qui s'est formée au cours du traitement thennique a été séparée du liquide ionique par centrifugation, lavée 3 fois avec 10 ml de dichloroniéthane, puis séchée à l'étuve à 60°C.

L'affinement du spectre de diffraction des rayons X réalisé avec une cathode de cuivre (représenté sur la figure 18) montre la présence de deux phases LiFeSO₄F et FeSO₄.H₂O dans des proportions équivalentes.
Phase 1 : LiFeSO₄F
   Triclinique, groupe d'espace : P -1 (2)
   A = 5,1819(5) Å, b = 5,4853(4) Å, c = 7,2297(4) Å,
   α = 106,4564(3) °, β = 107,134(6) °, γ = 97,922(5) °
   V = 182,761(4) Å³.
Phase 2 : FeSO₄.H₂O
   Triclinique, groupe d'espace : P -1 (2)
   A = 5,178(7) Å, b = 5,176(7) Å, c = 7,599(7) Å;
   α = 107,58(6) °, β = 107,58(8) °, γ = 93,34(6) °
   V = 182,56(4) Å³_{.}

Cet exemple montre que l'utilisation du sulfate de fer heptahydrate ne permet pas d'obtenir un composé monophase triclinique.

### Exemple 16

### Synthèse de LiFeSO₄F à partir de FeSO₄.HO₂ et LiF dans EMI-TFSI

Dans un flacon en PTFE contenant 3 ml de bis(trifluorométhanesulfonyl)-imide de 1-éthyl-3-méthylimidazolium (EMI-TFSI), on a introduit un mélange de 0,85 g de FeSO₄.H₂O et 0,149 g de LiF (rapport molaire 1/1,14) préparé dans un mortier, on a soumis le mélange à une agitation magnétique pendant 20 minutes à température ambiante, on a arrêté l'agitation, puis on a ajouté 2 ml de liquide ionique (EMI-TFSI), et on a maintenu le mélange sans agitation à température ambiante pendant 30 minutes. L'ensemble a ensuite été introduit dans un four à 200°C, la température du four a été augmentée de 10°C toutes les 20 minutes jusqu'à 275°C, maintenue à cette valeur pendant 12 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

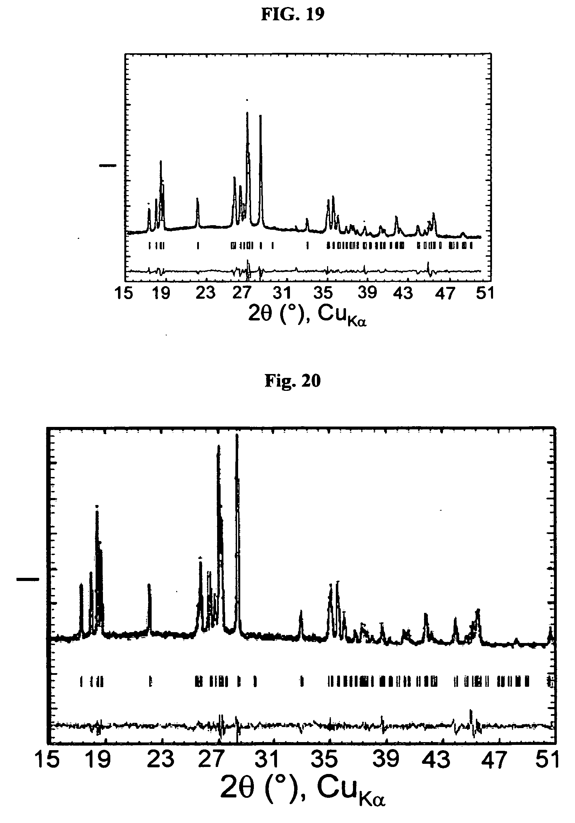

L'affinement du spectre de diffraction des rayons X réalisé avec une cathode de cuivre (représenté sur la figure 19) montre la présence d'une phase unique LiFeSO₄F, dont les paramètres de maille sont comme suit :
Triclinique, groupe d'espace : P -1 (2)
a = 5,1827(7) Å, b = 5,4946(6) Å, c = 7,2285(7) Å,
α = 106,535(7) °, β = 107,187(6) °, γ = 97,876(5) °
V = 182,95(4) Å³_{.}

### Exemple 17

### Synthèse de LiFeSO₄F à partir de FeSO₄.H₂O et LiF

Dans un autoclave contenant 3 ml de bis(trifluorométhanesulfonyl)imide de 1-éthyl-3-méthylimidazolium (EMI-TFSI), on a introduit un mélange de 0,85 g de FeSO₄.H₂O et 0,149 g de LiF (rapport molaire 1/1,14) préparé dans un mortier, on a soumis le mélange à une agitation magnétique pendant 30 minutes à température ambiante, on a arrêté l'agitation, puis on a ajouté 2 ml de liquide ionique (EMI-TFSI), et on a maintenu le mélange sans agitation à température ambiante pendant 30 minutes. Après fermeture de l'autoclave sous argon, l'ensemble a été introduit dans un four à 200°C, la température du four a été augmentée de 10°C toutes les 20 minutes jusqu'à 280°C, maintenue à cette valeur pendant 48 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

Le produit obtenu se présente sous forme d'une poudre blanchâtre. La couleur légèrement différente de celle de l'échantillon de l'exemple 1 dénote une aptitude à la non stoechiométrie des phases, suivant les doncitions opératoires.

L'affinement du spectre de diffraction des rayons X réalisé avec une cathode de cuivre (représenté sur la figure 20) montre la présence d'une phase unique LiFeSO₄F, dont les paramètres de maille sont comme suit :
Triclinique, groupe d'espace : P -1 (2)
a = 5,1782(4) Å, b = 5,4972(4) Å, c = 7,2252(4) Å,
α = 106,537(4) °, β = 107,221(4) °, γ = 97,788(3) °
V = 182,82(4) Å³.

### Exemple 18

### Synthèse de LiFeSO₄F à partir de FeSO₄.H₂O et LiF dans le 1-butyl-3-méthylimidazolium trifluorométhanesulfonate (triflate)

Dans un autoclave contenant 3 ml de trifluorométhanesulfonate de 1-butyl-3-méthylimidazolium (triflate), on a introduit un mélange de 0,85 g de FeSO₄.H₂O et 0,149 g de LiF (rapport molaire 1/1,14) préparé dans un mortier, on a soumis le mélange à une agitation magnétique pendant 30 minutes à température ambiante, on a arrêté l'agitation, puis on a ajouté 2 ml de liquide ionique EMI-Tf et on a maintenu le mélange sans agitation à température ambiante pendant 30 minutes. Après fermeture de l'autoclave sous argon, l'ensemble a été introduit dans un four à 200°C, la température du four a été augmentée de 10°C toutes les 20 minutes jusqu'à 270°C, maintenue à cette valeur pendant 48 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

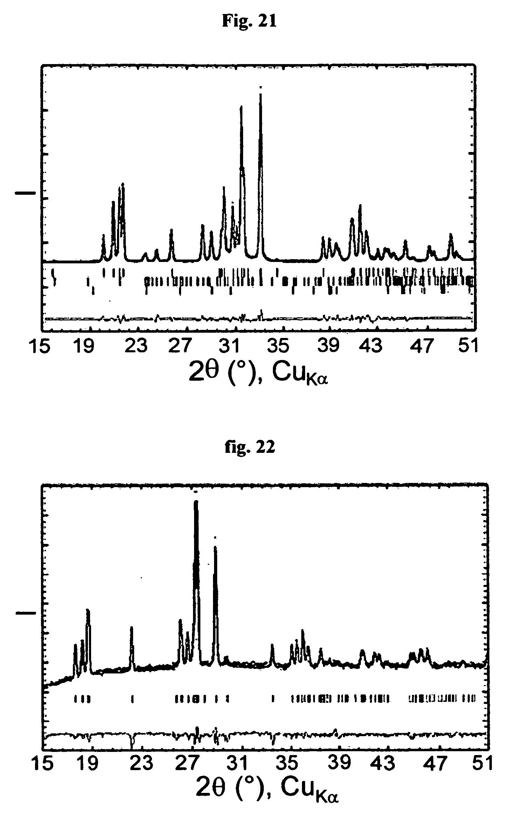

L'affinement du spectre de diffraction des rayons X réalisé avec une cathode de cobalt (représenté sur la figure 21) montre la présence d'une phase LiFeSO₄F (représentant environ 50% en masse), et de deux phases "FeSO₄ anhydre".
Phase 1 : LiFeSO₄F, Triclinique, groupe d'espace : P -1 (2)
Phase 2 : orthorhombique, groupe d'espace Cmcm (63)
Phase 3 : orthorhombique, groupe d'espace Pbnm (62)

La comparaison de cet exemple avec l'exemple précédent montre que l'utilisation d'un liquide ionique hydrophobe (EMI-TFSI), permet d'obtenir un composé LiFeSO₄F monophase, alors que le liquide ionique hydrophile utilisé dans le présent exemple déshydrate le FeSO₄.H₂O avant la réaction. Le résultat en est une réaction partielle, de sorte que le produit final est un mélange.

### Exemple 19

### Synthèse de LiCoSO₄F à partir de CoSO₄.H₂O et LiF dans l'EMI-TFSI

Le précurseur CoSO₄.H₂O utilisé a été préparé à partir de CoSO₄.7H₂O par chauffage sous vide à 160°C pendant 2 heures.

Dans un flacon en PTFE contenant 5 ml de bis(trifluorométhanesulfonyl)-imide de 1-éthyl-3-méthylimidazolium (EMI-TFSI), on a introduit un mélange de 0,86 g de CoSO₄.H₂O et 0,149 g de LiF (rapport molaire 1/1,13) préparé dans un mortier, on a soumis le mélange à une agitation magnétique pendant 20 minutes à température ambiante, et on a arrêté l'agitation. Le flacon a ensuite été fermé sous argon, et on a maintenu le mélange réactionnel sans agitation à température, ambiante pendant 30 minutes. L'ensemble a ensuite été introduit dans un four à 250°C, la température du four a été augmentée de 5°C toutes les 10 minutes jusqu'à 275°C, maintenue à cette valeur pendant 36 heures, puis on a laissé refroidir lentement.

La poudre qui s'est formée au cours du traitement thermique a été séparée du liquide ionique par centrifugation, lavée 3 fois avec 10 ml d'acétate d'éthyle, puis séchée à l'étuve à 60°C.

L'affinement du spectre de diffraction des rayons X réalisé avec une cathode de cobalt (représenté sur la figure 22) montre la présence d'une phase unique de maille triclinique (P-1) LiCoSO₄F, dont les paramètres de maille sont comme suit :
a = 5, 1719(6) Å, b = 5, 4192(6) Å, c = 7, 1818(7) Å,
α = 106, 811(7) °, β = 107, 771 (7) °, γ = 97, 975 (5) °
V = 177,71(3) Å³_{.}

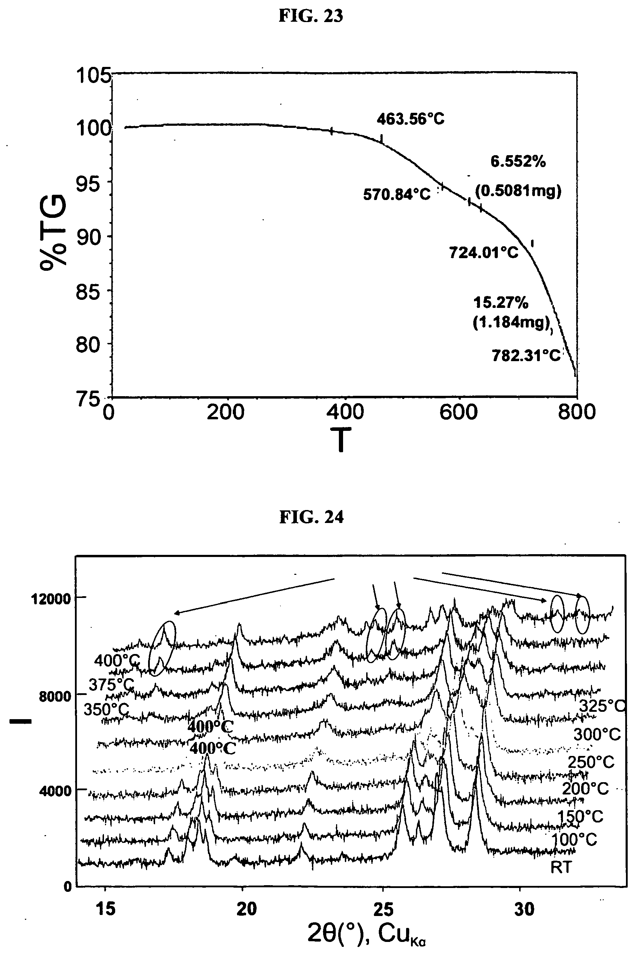

La courbe obtenue par analyse thermogravimétrique est représentée sur la figure 23. Elle montre une perte de poids à partir de 400°C, preuve que le composé LiCoSO₄F est décomposé. Il ne peut donc être obtenu par un procédé en phase solide mettant en oeuvre des températures plus élevées.

Pour confirmer ce fait, un échantillon du produit obtenu dans le présent exemple a été chauffé à l'air pendant 30 minutes comme dans US-2005/0163699.

La figure 24 représente l'évolution du diagramme de diffraction des rayons X lors de l'augmentation de la température. Les flèches désignent les zones dans lesquelles se trouvent les pics correspondant à des produits de décomposition. Il apparaît ainsi que le composé commence à se décomposer à 375°C. La mention "RT" portée à droite de la courbe inférieure signifie "température ambiante".

### Exemple 20

### Synthèse de LiNiSO₄F à partir de NiSO₄.H₂O et LiF dans EMI-TFSI

Le monohydrate NiSO₄.H₂O utilisé comme précurseur a été préparé à partir de NiSO₄.7H₂O par chauffage sous vide à 240°C pendant 2 heures.

Dans un flacon en PTFE contenant 5 ml de bis(trifluorométhane-sulfonyl)imide de 1-éthyl-3-méthylimidazolium (EMI-TFSI), on a introduit un mélange de 0,86 g de NiSO₄.H₂O et 0,149 g de LiF (rapport molaire 1/1,13) préparé dans un mortier, on a soumis le mélange à une agitation magnétique pendant 20 minutes à température ambiante, et on a arrêté l'agitation. Le flacon a ensuite été fermé sous argon, et on a maintenu le mélange réactionnel sans agitation à température ambiante pendant 30 minutes. L'ensemble a ensuite été introduit dans un four à 250°C, la température du four a été augmentée jusqu'à 285°C en 2 heures, maintenue à cette valeur pendant 36 heures, puis on a laissé refroidir lentement.

La poudre qui s'est formée au cours du traitement thermique a été séparée du liquide ionique par centrifugation, lavée 3 fois avec 10 ml d'acétate d'éthyle, puis séchée à l'étuve à 60°C.

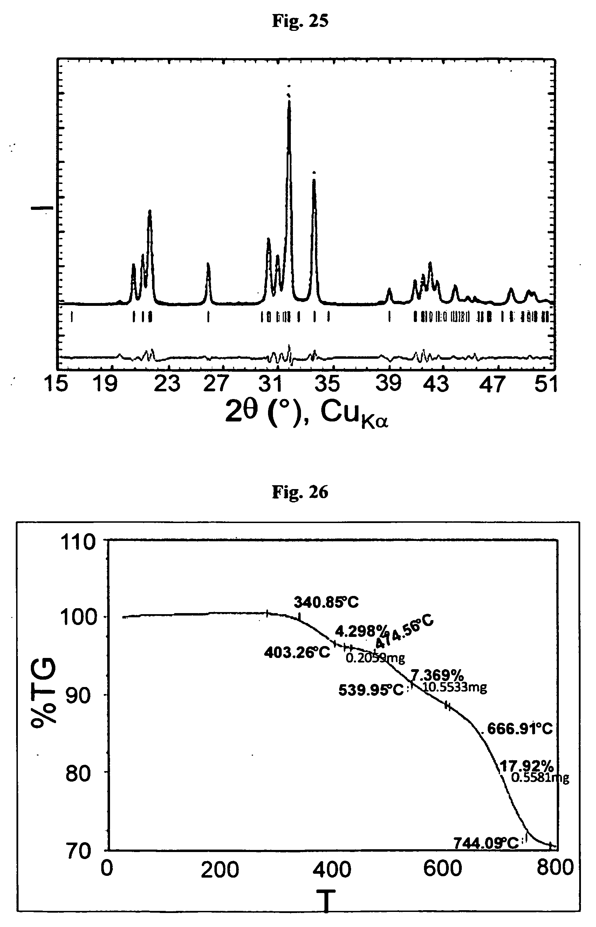

Le diagramme de diffraction des rayons X réalisé avec une cathode de cobalt (représenté sur la figure 25) montre que le composé obtenu contient plus de 90,95% d'une phase analogue à celle de LiFeSO₄F ou LiCoSO₄F. Les paramètres de maille de cette phase sont comme suit :
Triclinique, groupe d'espace : P -1 (2)
a = 5, 173(1) Å, b = 5, 4209(5) Å, c = 7, 183(1) Å,
α = 106, 828(9) °, β = 107, 776(8) °, γ = 97, 923 (8) °
V = 177, 85(5) Å³_{.}

La courbe obtenue par analyse thermogravimétrique est représentée sur la figure 26. Elle montre une perte de poids à partir de 380°C, preuve que le composé LiNiSO₄F est décomposé. Il ne peut donc être obtenu par un procédé en phase solide mettant en oeuvre des températures plus élevées.

Pour confirmer ce fait, un échantillon du produit obtenu dans le présent exemple a été chauffé à l'air pendant 30 minutes comme dans US-2005/0163699.

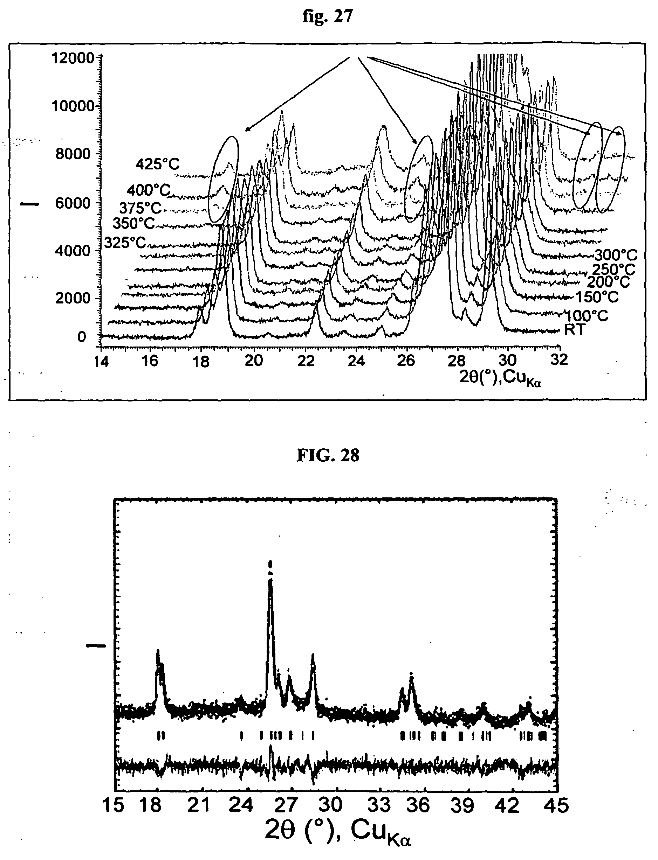

La figure 27 représente l'évolution du diagramme de diffraction des rayons X lors de l'augmentation de la température. Les flèches désignent les zones dans lesquelles se trouvent les pics correspondant à des produits de décomposition. Il apparaît ainsi que le composé commence à se décomposer à 375°C. La mention "RT" portée à droite de la courbe inférieure signifie "température ambiante".

### Exemple 21

### Solution solide LiFe_{1-y}MnySO₄F

Un composé LiFe_{1-y}Mn_{y}SO₄F a été préparé à partir de LiF et d'une solution solide Fe_{1-y}MnySO₄. H₂O en tant que précurseur.

### Préparation du précurseur

On a dissous 1-y mol de FeSO₄.7H₂O et y mol MnSO₄.H₂O dans 2 ml d'eau préalablement dégazée par l'argon pour éviter l'oxydation de Fe(II), puis on ajouté 20 ml d'éthanol. La poudre qui s'est formée par précipitation lors de l'addition de l'éthanol a été récupérée par centrifugation, lavée 2 fois avec 20 ml d'éthanol, puis chauffée à 200°C sous vide pendant 1 heure.

Plusieurs échantillons ont été préparés, en faisant varier la valeur de y.

Les échantillons ont été analysés par diffraction des rayons X. Le diffractogramme de l'échantillon "y=0,5" obtenu est représenté sur la figure 28. Il montre qu'il s'agit de la solution solide Fe_{0,5}Mn_{0,5}SO₄.H₂O dont les paramètres de maille sont comme suit :
Triclinique ; groupe d'espace : P-1 (2)
a = 5,2069 Å, b = 5,2056 Å, c = 7,6725 Å,
α = 107,7196 °, β = 107,4498 °, γ = 93,08 °
V = 186,56 Å³.

### Préparation de la solution solide LiFe_{1-y}MnySO₄F

La synthèse a été réalisée par voie ionothermale dans un autoclave à 270°C, pour divers échantillons de précurseurs.

Dans un autoclave contenant 3 ml de bis(trifluorométhanesulfonyl)imide de 1-éthyl-3-méthylimidazolium (EMI-TFSI), on a introduit un mélange de 0,85 g de Fe_{0,5}Mn_{0,5}SO₄.H₂O et 0,149 g de LiF (rapport molaire 1/1,14) préparé dans un mortier, on a soumis le mélange à une agitation magnétique pendant 20 minutes à température ambiante, on a arrêté l'agitation, puis on a ajouté 2 ml de liquide ionique (EMI-TFSI), et on a maintenu le mélange sans agitation à température ambiante pendant 30 minutes. Après fermeture de l'autoclave sous argon, l'ensemble a été introduit dans un four à 200°C, la température du four a été augmentée de 10°C toutes les 20 minutes jusqu'à 270°C, et maintenue à cette valeur pendant 48 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

La diffraction des rayons X montre la formation de solution solide LiFe_{1-y}Mn_{y}SO₄F aux faibles valeurs de y (notamment pour y< 0,1) et la formation de phases mixtes pour les valeurs plus élevées de y (notamment pour y> 0,25).

### Exemple 22

### Préparation de FeSO₄F

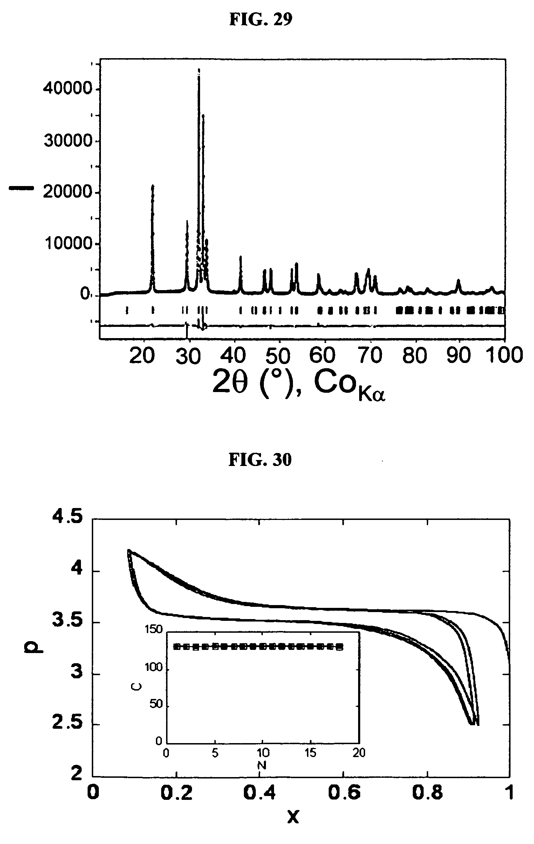

Le composé est préparé par délithiation chimique avec NO₂OF₄ dans l'acétonitrile à température ambiante. Le spectre de diffraction des rayons X représenté sur la figure 29 montre que le composé se cristallise dans une maille dont les paramètres sont :
Triclinique, groupe d'espace : P -1 (2)
A = 5,0682 Å, b = 5,0649 Å, c = 7.255 Å
α = 69,36 β = 68,80 °, γ = 88,16 °
V = 161,52 Å³.

### Exemple 23

### Tests électrochimiques

Des échantillons de composé LiFeSO₄F, préparés selon l'exemple 16, ont été testés en tant que matériau d'électrode positive dans dans une cellule Swagelok dans laquelle l'électrode est un feuillard de lithium, les deux électrodes étant séparées par un séparateur en polypropylène imbibé par une solution 1 M de LiPF₆ dans un mélange carbonate d'éthylène/carbonate de diméthyle EC-DMC 1/1. Pour l'élaboration d'une électrode positive, on a mélangé 80 mg de LiFeSO₄F (sous forme de particules ayant un diamètre moyen de 1 µm) et 20 mg de carbone par broyage mécanique dans un broyeur SPEX 1800 pendant 15 minutes. On a appliqué sur un collecteur de courant en aluminium, une quantité de mélange correspondant à 8 mg de LiFeSO₄F par cm².

Sur la figure 30, la courbe principale représente la variation du potentiel en fonction du taux d'insertion du lithium, lors du cyclage de la cellule à un régime de C/10, et l'insert représente l'évolution de la capacité d'une cellule lors de la succession de cycles à un régime de C/10, N étant le nombre de cycles.

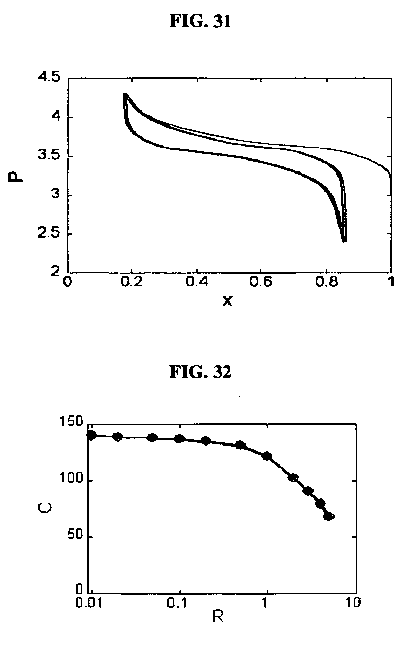

La figure 31 représente la variation du potentiel en fonction du taux d'insertion du lithium, lors du cyclage de la cellule à un régime de C/2.

La figure 32 représente la variation de la capacité d'une cellule en fonction du régime de cyclage R.

Il apparaît ainsi que la capacité reste à 90% à un régime de 0,5C, et à 67% à un régime de C/10.

## Revendications

1. Procédé pour la préparation d'un oxyde inorganique de formule (I) AₐMₘ(YO₄)_{y}Z_{z} dans laquelle :
- A représente au moins un élément choisi parmi les métaux alcalins, les métaux alcalino-terreux, un élément dopant et une lacune ;
- M représente (T₁₋ₜT'₁), T représentant un ou plusieurs métaux de transition et T' représentant au moins un élément choisi Mg, Ca, Al, et les terres rares, 0≤t<1 ;
- Y représente au moins un élément choisi parmi S, Se, P, As, Si, Ge et Al ;
- Z représente au moins un élément choisi parmi F, O ou OH
- a, m, y, et z sont les coefficients stoechiométriques et sont des nombres réels nuls ou positifs avec les conditions suivantes :
* a, m, t, y, et z sont tels que la neutralité électrique de l'oxyde inorganique de formule (I) est respectée,
* a ≥ 0 ; m > 0 ; y>0
* z ≥ 0 ;
à partir de précurseurs des éléments constitutifs de l'oxyde inorganique de formule (I), ledit procédé étant **caractérisé en ce qu'**il comprend les étapes suivantes :
i) la dispersion desdits précurseurs dans un liquide support comprenant un ou plusieurs liquides ioniques constitués d'un cation et d'un anion dont les charges électriques s'équilibrent, pour obtenir une suspension desdits précurseurs dans ledit liquide,
ii) le chauffage de ladite suspension à une température de 25 à 380°C,
iii) la séparation dudit liquide ionique et de l'oxyde inorganique de formule (I) issu de la réaction entre lesdits précurseurs.

2. Procédé selon la revendication 1, caractérisé en ce les précurseurs d'un métal alcalin ou alcalino-terreux A sont choisis parmi les sels d'anions thermolabiles, tels que les carbonates, les hydrogéno-carbonates, les hydroxydes, les peroxydes, les nitrates les sels d'acides organiques volatils tels que les acétates et les formates ; les sels d'acides décomposables à chaud tels que les oxalates, les malonates et les citrates.

3. Procédé selon la revendication 2, **caractérisé en ce que** les dits précurseurs sont choisis parmi Li₂CO₃, LiHCO₃, LiOH, Li₂O₂, LiNO₃, LiCH₃CO₂, LiCHO₂, Li₂C₂O₄, Li₃C₆H₅O₇, Na₂CO₃, NaOH, Na₂O₂, NaNO₃, NaCH₃CO₂, NaCHO₂, Na₂C₂O₄, Na₃C₆H₅O₇, K₂CO₃, KOH, K₂O₂, KO₂ KNO₃, KCH₃CO₂, KCHO₂, K₂C₂O₄, K₃C₆H₅O₇ et leurs hydrates.

4. Procédé selon l'une quelconque des revendications 1 à 3, **caractérisé en ce que** les précurseurs d'un métal de transition M et de terres rares sont choisis parmi les sels d'acides inorganiques volatils à savoir les nitrates et les carbonates, les sels d'acides organiques volatils à avoir les acétates et les formates, les sels d'acides décomposables à chaud à savoir les oxalates, les malonates et les citrates et les sels d'acides inorganiques à savoir les sulfates, les chlorures et les bromures.

5. Procédé selon l'une quelconque des revendications précédentes, **caractérisé en ce que** les précurseurs des oxyanions YO₄ sont choisis parmi les acides correspondants tels que H₂SO₄, H₃PO₄ ; les sels d'ammonium, d'amine, d'imidazole ou de pyridine thermolabiles tels que par exemple NH₄HSO₄, (NH₄)₂SO₄, NH₄HSeO₄, (NH₄)₂SeO₄, NH₄H₂PO₄, (NH₄)₂HPO₄, NH₄H₂AsO₄ et (NH₄)₂HAsO₄ ; les dérivés du silicium ou du germanium sous forme de Si02 ou GeO₂ nanométriques ; les dérivés de tétraalkoxysilanes ou de germanes tels que (R³O)₄Si et (R³O)₄Ge ou les polymères -Si[OR3)2-I]ₚ (avec 0 ≤ p ≤ 10⁴) et dans lesquels R³ représente un groupe alkyle ou alkyloxyalkyle ayant de préférence de 1 à 10 atomes de carbone.

6. Procédé selon l'une quelconque des revendications 1 à 5, **caractérisé en ce que** les précurseurs des oxyanions sont choisis parmi AHSO₄, A₂SO₄, AHSeO₄, A₂SeO₄, AH₂PO₄, A₂HPO₄, A₃PO₄, AH₂AsO₄, A₂HAsO₄, A₃AsO₄, A₄SiO₄, A₄GeO₄, A₂SiO₃, A₂GeO₃ et M₂Si₅O₁₃ dans lesquels A représente un métal alcalin ou alcalino-terreux.

7. Procédé selon la revendication 6, **caractérisé en ce que** les précurseurs des oxyanions sont choisis parmi LiHSO₄, Li₂SO₄, LiH₂PO₄, Li₃PO₄, Li₄SiO₄, Li₂SiO₃, Li₂Si₅O₁₃.

8. Procédé selon l'une quelconque des revendications précédentes, **caractérisé en ce que** la quantité de précurseurs présente au sein du liquide ionique lors de l'étape i) est de 0,01 % à 85 % en masse.

9. Procédé selon l'une quelconque des revendications précédentes, **caractérisé en ce que** les oxydes de formule (I) sont choisis parmi les phosphates AₐMₘPO₄, les fluorophosphates AₐMₘPO₄F ou MPO₄F, les fluorosulfates AₐMₘSO₄F, les silicates à structure olivine Fe_{2-x-z}MnₓMg_{w}SiO₄, (0 ≤ x, w ≤ 2), et les silicates mixtes avec le lithium Li₂Fe_{i-x'-w'}Mn_{x'}Mg_{w'}SiO₄ (0 ≤ x', w' ≤ 1), les sulfates, des silicophosphates, les phosphosulfates, les silicosulfates, les phosphosilicosulfates.

10. Procédé selon l'une quelconque des revendications précédentes, **caractérisé en ce que** les cations du liquide ionique sont choisis parmi les cations de formules suivantes : 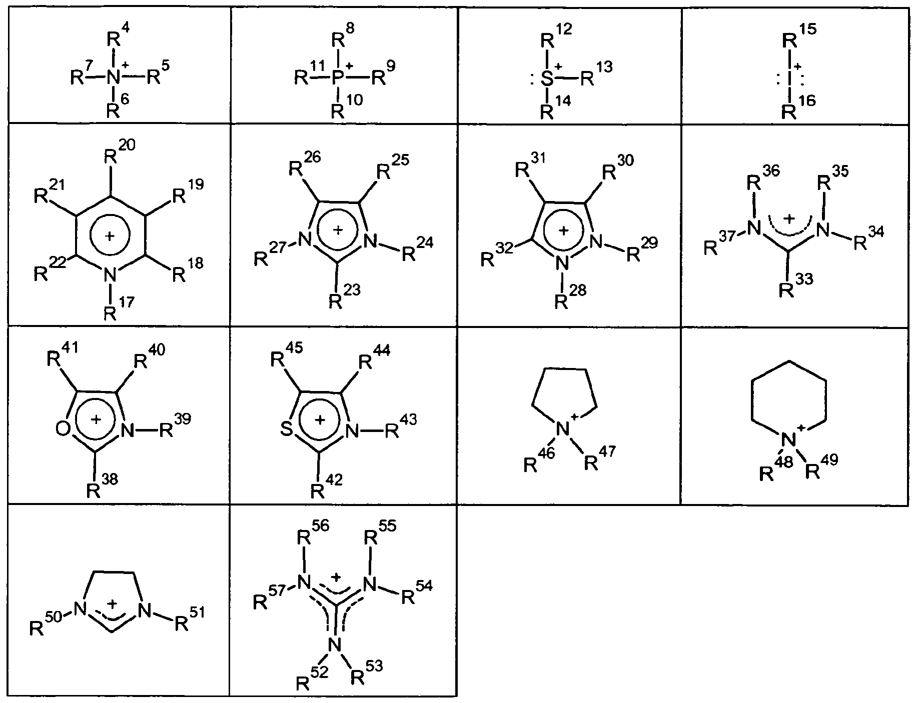 dans lesquelles :
- les radicaux R⁴-R¹⁷, R²⁷, R²⁴, R²⁸, R²⁹, R³⁷, R³⁴, R³⁹, R⁴³ et R⁴⁶ à R⁵⁷, indépendamment les uns des autres, représentent un radical alkyle en C₁-C₂₄, arylalkyle en C₁-C₂₄ ou alkyl(C₁-C₂₄)aryle,
- les radicaux R¹⁸ à R²², R²³, R²⁵, R²⁶, R³⁰ à R³³, R³⁵, R³⁶, R³⁸, R⁴⁰ à R⁴² , R⁴⁴ et R⁴⁵ représentent un atome d'hydrogène, un radical alkyle en C₁-C₂₄, aryle, oxaalkyle en C₁-C₂₄ ou un radical [(CH)₂]ₘQ dans lequel Q représente OH, CN, C(=O)OR⁵⁸, C(=O)NR⁵⁹R⁶⁰, NR⁶¹R⁶², ou bien un radical 1-imidazoyle, 3-imidazoyle ou 4-imidazoyle et m est un nombre entier positif compris entre 0 et 12 inclusivement ;
- les radicaux R⁸ à R¹⁶ peuvent également désigner un radical alkyl(C₁-C₂₀)aryle ou un groupement NR⁶³R⁶⁴,
- R⁵⁸ à R⁶⁴, indépendamment les uns des autres, représentent un atome d'hydrogène, un radical alkyle en C₁-C₂₀ aryle ou oxaalkyle en C₁-C₂₀.

11. Procédé selon l'une quelconque des revendications précédentes, **caractérisé en ce que** les anions des liquides ioniques sont choisis parmi : Cl, Br, I, RSO₃⁻, ROSO₃⁻, [RPO₂]⁻, [R(R'O)PO₂]⁻, [(RO)₂PO₂]⁻, BF₄⁻, R_{f}BF₃⁻, PF₆⁻, R_{f}PF₅⁻, (R_{f})₂PF₄⁻, (R_{f})₃PF₃⁻, R_{f}CO₂⁻_{,} R_{f}SO₃⁻, [(R_{f}SO₂)₂N]⁻, [(R_{f}SO₂)₂CH]⁻, [(R_{f}SO₂)₂C(CN)]⁻, [R_{f}SO₂C(CN)₂]⁻, [(R_{f}SO₂)₃C]⁻, N(CN)₂⁻, C(CN)₃⁻, [(C₂O₄)₂B]⁻ dans lesquels :
- R et R', identiques ou différents, représente un radical alkyle en C₁-C₂₄, aryle ou alkyl(C₁-C₂₄)aryle,
- R_{f} est un radical fluoré choisi parmi CₙF₂ₙ₊₁ dans lequel 0 ≤ n ≤ 8, CF₃OCF₂, HCF₂CF₂ et C₆F₅.

12. Procédé selon l'une quelconque des revendications précédentes, **caractérisé en ce que** le liquide ionique renferme un ou plusieurs précurseurs de carbone choisis parmi les hydrates de carbone simples tels que les sucres et les hydrates de carbone polymérisés tels que l'amidon et la cellulose.

13. Procédé selon la revendication 16, **caractérisé en ce que** l'étape de chauffage ii) est poursuivie au-delà de 380°C.

14. Procédé selon l'une quelconque des revendications précédentes, **caractérisé en ce que** l'étape ii) de chauffage est effectuée sous atmosphère inerte, à la pression atmosphérique.

15. Procédé selon l'une quelconque des revendications précédentes, **caractérisé en ce que** la durée de l'étape ii) de chauffage varie de 10 minutes à 200 heures.

## Patentansprüche

1. Verfahren zur Herstellung eines anorganischen Oxids der Formel (I) AₐMₘ(YO₄)_{y}Z_{z}, wobei:
- A mindestens ein Element darstellt, das aus den alkalischen Metallen, den erdalkalischen Metallen ausgewählt ist, ein dotierendes Element und eine Lücke,
- M (T_{I-t}T'ₜ) darstellt, wobei T ein oder mehrere Übergangsmetalle darstellt und T' mindestens ein ausgewähltes Element Mg, Ca, Al darstellt, und die seltenen Erden, 0≤t<1,
- Y mindestens ein Element darstellt, das aus S, Se, P, As, Si, Ge und Al ausgewählt ist,
- Z mindestens ein Element darstellt, das aus F, O oder OH ausgewählt ist,
- a, m, y und z stöchiometrische Koeffizienten sind und reelle Zahlen null oder positiv sind, mit den folgenden Bedingungen:
* a, m, t, y und z sind derart, dass die elektrische Neutralität des anorganischen Oxids der Formel (I) respektiert wird,
* a ≥ 0; m > 0; y > 0,
*z ≥ 0;
aus Vorstufen der Elemente, die das anorganische Oxid der Formel (I) bilden, wobei das Verfahren **dadurch gekennzeichnet ist, dass** es die folgenden Schritte umfasst:
i) die Dispersion der Vorstufen in einer Trägerflüssigkeit, die eine oder mehrere ionische Flüssigkeiten umfasst, die von einem Kation und von einem Anion gebildet werden, deren elektrische Ladungen sich ausgleichen, um eine Suspension der Vorstufen in der Flüssigkeit zu erhalten,
ii) das Erhitzen der Suspension auf eine Temperatur von 25 bis 380 °C,
iii) das Trennen der ionischen Flüssigkeit und des anorganischen Oxids der Formel (I), entstanden aus der Reaktion zwischen den Vorstufen.

2. Verfahren nach Anspruch 1, **dadurch gekennzeichnet, dass** die Vorstufen eines alkalischen oder erdalkalischen Metalls A aus den Salzen thermisch labiler Anionen wie den Carbonaten, den Hydrogencarbonaten, den Hydroxiden, den Peroxiden, den Nitraten; den Salzen flüchtiger organischer Säuren wie den Acetaten und den Formaten; den Salzen von bei Wärme zersetzbaren Säuren wie den Oxalaten, den Malonaten und den Citraten ausgewählt sind.

3. Verfahren nach Anspruch 2, **dadurch gekennzeichnet, dass** die Vorstufen aus Li₂CO₃, LiHCO₃, LiOH, Li₂O₂, LiNO₃, LiCH₃CO₂, LiCHO₂, Li₂C₂O₄, Li₃C₆H₅O₇, Na₂CO₃, NaOH, Na₂O₂, NaNO₃, NaCH₃CO₂, NaCHO₂, Na₂C₂O₄, Na₃C₆H₅O₇, K₂CO₃, KOH, K₂O₂, KO₂, KNO₃, KCH₃CO₂, KCHO₂, K₂C₂O₄, K₃C₆H₅O₇ und ihren Hydraten ausgewählt sind.

4. Verfahren nach einem der Ansprüche 1 bis 3, **dadurch gekennzeichnet, dass** die Vorstufen eines Übergangsmetalls M und seltener Erden aus den Salzen flüchtiger anorganischer Säuren, nämlich den Nitraten und den Carbonaten, den Salzen flüchtiger organischer Säuren, nämlich den Acetaten und den Formaten; den Salzen von bei Wärme zersetzbaren Säuren, nämlich den Oxalaten, den Malonaten und den Citraten und den Salzen anorganischer Säuren, nämlich den Sulfaten, den Chloriden und den Bromiden, ausgewählt sind.

5. Verfahren nach einem der vorangehenden Ansprüche, **dadurch gekennzeichnet, dass** die Vorstufen der Oxianions YO₄ aus den entsprechenden Säuren wie H₂SO₄, H₃PO₄; den thermisch labilen Ammonium-, Amin-, Imidazol- oder Pyridinsalzen wie beispielsweise NH₄HSO₄, (NH₄)₂SO₄, NH₄HSeO₄, (NH₄)₂SeO₄, NH₄H₂PO₄, (NH₄)₂HPO₄, NH₄H₂AsO₄ und (NH₄)₂HAsO₄; den Derivaten des Siliziums oder des Germaniums in Form von nanometrischen SiO₂ oder GeO₂; den Derivaten von Tetraalkoxisilanen oder von -germaniums wie (R³O)₄Si und (R³O)₄Ge oder den Polymeren -Si[OR₃)₂-I]ₚ (mit 0 ≤ p ≤ 10⁴) ausgewählt sind und wobei R³ eine Alkyl- oder Alkyloxialkyl-Gruppe darstellt mit vorzugsweise 1 bis 10 Kohlenstoffatomen.

6. Verfahren nach einem der Ansprüche 1 bis 5, **dadurch gekennzeichnet, dass** die Vorstufen der Oxianionen aus AHSO₄, A₂SO₄, AHSeO₄, A₂SeO₄, AH₂PO₄, A₂HPO₄, A₃PO₄, AH₂AsO₄, A₂HAsO₄, A₃AsO₄, A₄SiO₄, A₄GeO₄, A₂SiO₃, A₂GeO₃ und M₂Si₅O₁₃ ausgewählt sind, wobei A ein alkalisches oder erdalkalisches Metall darstellt.

7. Verfahren nach Anspruch 6, **dadurch gekennzeichnet, dass** die Vorstufen der Oxianionen aus LiHSO₄, Li₂SO₄, LiH₂PO₄, Li₃PO₄, Li₄SiO₄, Li₂SiO₃, Li₂Si₅O₁₃ ausgewählt sind.

8. Verfahren nach einem der vorangehenden Ansprüche, **dadurch gekennzeichnet, dass** die in der ionischen Flüssigkeit bei Schritt i) vorhandene Vorstufenmenge 0,01 bis 85 Masseprozent darstellt.

9. Verfahren nach einem der vorangehenden Ansprüche, **dadurch gekennzeichnet, dass** die Oxide der Formel (I) aus den Phosphaten AₐMₘPO₄, den Fluorophosphaten AₐMₘPO₄F oder MPO₄F, den Fluorosulfaten AₐMₘSO₄F, den Silikaten mit Olivinstruktur Fe_{2-x-z}MnₓMg_{w}SiO₄; (0 ≤ x, w ≤ 2) und den mit dem Lithium gemischten Silikaten Li₂Fe_{i-x'-w'}Mn_{x'}Mg_{w'}SiO₄ (0 ≤ x', w' ≤ 1), den Sulfaten, den Silicophosphaten, den Phosphosulfaten, den Silicosulfaten, den Phosphosilicosulfaten ausgewählt sind.

10. Verfahren nach einem der vorangehenden Ansprüche, **dadurch gekennzeichnet, dass** die Kationen der ionischen Flüssigkeit aus den Kationen der folgenden Formeln ausgewählt sind: 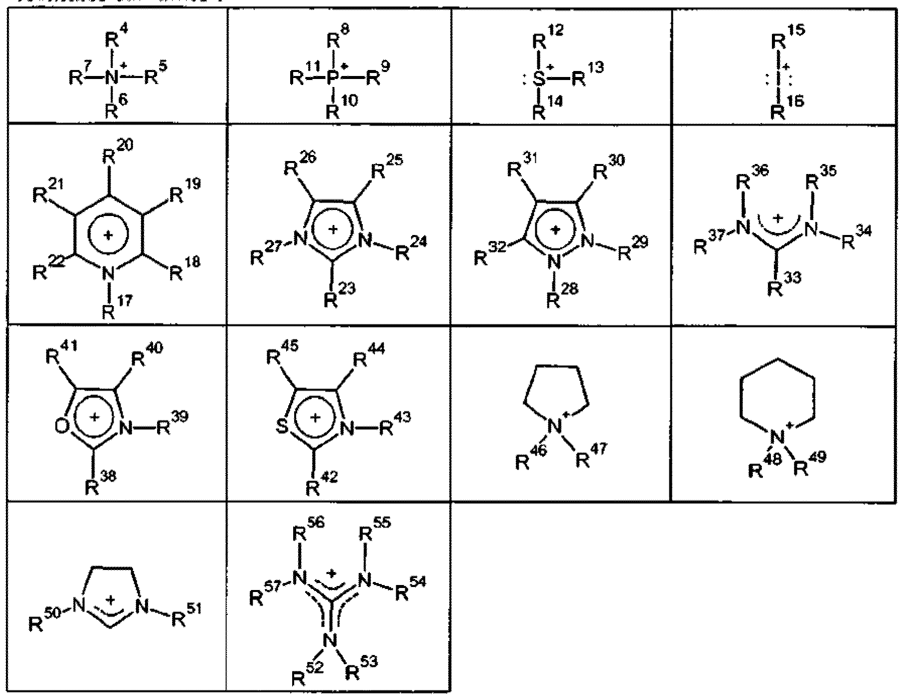 wobei:
- die Radikale R⁴-R¹⁷, R²⁷, R²⁴, R²⁸, R²⁹, R³⁷, R³⁴, R³⁹, R⁴³ und R⁴⁶ bis R⁵⁷ unabhängig voneinander ein C₁-C₂₄-Alkyl-, C₁-C₂₄-Arylalkyl- oder Alkyl(C₁-C₂₄)arylradikal darstellen,
- die Radikale R¹⁸ bis R²², R²³, R²⁵, R²⁶, R³⁰ bis R³³, R³⁵, R³⁶, R³⁸, R⁴⁰ bis R⁴², R⁴⁴ und R⁴⁵ ein Wasserstoffatom, ein C₁-C₂₄-Alkyl-, Aryl-, C₁-C₂₄-Oxaalkylradikal oder ein Radikal [(CH)₂]ₘQ, in dem Q OH, CN, C(=O)OR⁵⁸, C(O)NR⁵⁹R⁶⁰, NR⁶¹R⁶² darstellt, oder ein 1-Imidazoyl-, 3-Imidazoyl- oder 4-Imidazoylradikal darstellen und m eine positive ganze Zahl zwischen 0 und 12 inklusive ist,
- die Radikale R⁸ bis R¹⁶ auch ein Alkyl(C₁-C₂₀)arylradikal oder eine NR⁶³R⁶⁴-Gruppe bezeichnen können,
- R⁵⁸ bis R⁶⁴ unabhängig voneinander ein Wasserstoffatom, ein C₁-C₂₀-Alkyl-, Aryl- oder C₁-C₂₀-Oxaalkylradikal darstellen.

11. Verfahren nach einem der vorangehenden Ansprüche, **dadurch gekennzeichnet, dass** die Anionen der ionischen Flüssigkeiten ausgewählt sind aus: Cl, Br, I, RSO₃⁻, ROSO₃⁻, [RPO₂]⁻, [R(R'O)PO₂]⁻, [(RO)₂PO₂]⁻, BF₄⁻, R_{f}BF₃⁻, PF₆⁻, R_{f}PF₅⁻, (R_{f})₂PF₄⁻, (R_{f})₃PF₃⁻, R_{f}CO₂⁻, R_{f}SO₃-, [(R_{f}SO₂)₂N]⁻, [(R_{f}SO₂)₂CH]⁻, [(R_{f}SO₂)₂C(CN)]⁻, [R_{f}SO₂C(CN)₂]⁻, [(R_{f}SO₂)ₛC]⁻, N(CN)₂⁻, C(CN)₃⁻, [(C₂O₄)₂B]⁻, wobei:
- R et R', gleich oder unterschiedlich, ein C₁-C₂₄-Alkyl-, Aryl- oder Alkyl(C₁-C₂₄)arylradikal darstellen,
- R_{f} ein Fluoridradikal ist, das aus CₙF₂ₙ₊₁, wobei 0 ≤ n ≤ 8, CF₃OCF₂, HCF₂CF₂ und C₆F₅ ausgewählt ist.

12. Verfahren nach einem der vorangehenden Ansprüche, **dadurch gekennzeichnet, dass** die ionische Flüssigkeit eine oder mehrere Kohlenstoffvorstufen einschließt, die aus den einfachen Kohlenstoffhydraten wie den Zuckern und den polymerisierten Kohlenstoffhydraten wie der Stärke und der Zellulose ausgewählt sind.

13. Verfahren nach Anspruch 16, **dadurch gekennzeichnet, dass** der Erhitzungsschritt ii) jenseits von 380 °C fortgesetzt wird.

14. Verfahren nach einem der vorangehenden Ansprüche, **dadurch gekennzeichnet, dass** der Erhitzungsschritt ii) unter Inertatmosphäre bei atmosphärischem Druck durchgeführt wird.

15. Verfahren nach einem der vorangehenden Ansprüche, **dadurch gekennzeichnet, dass** die Dauer des Erhitzungsschritts ii) von 10 Minuten bis 200 Stunden schwankt.

## Claims

1. A process for preparing an inorganic oxide of formula (I) AₐMₘ(YO₄)_{y}Z_{z} (I) in which:
- A represents at least one element chosen from alkali metals, alkaline-earth metals, a dopant element and a space;
- M represents (T₁₋ₜT'ₜ), T representing one or more transition metals and T' representing at least one element chosen from Mg, Ca, Al and rare-earths, 0 ≤ t < 1;
- Y represents at least one element chosen from S, Se, P, As, Si, Ge and Al;
- Z represents at least one element chosen from F, O and OH;
- a, m, y and z are stoichiometric coefficients and are real, zero or positive numbers, with the following conditions:
* a, m, t, y and z are such that the electrical neutrality of the inorganic oxide of formula (I) is respected,
* a ≤ 0; m > 0; y > 0
* z ≥ 0;
starting with precursors of the constituent elements of the inorganic oxide of formula (I), said process being **characterized in that** it comprises the following steps:
i) dispersion of said precursors in a support liquid comprising one or more ionic liquids formed from a cation and an anion whose electrical charges equilibrate, to obtain a suspension of said precursors in said liquid,
ii) heating of said suspension to a temperature from 25 to 380°C,
iii) separation of said ionic liquid and of the inorganic oxide of formula (I) derived from the reaction between said precursors.

2. The process as claimed in claim 1, **characterized in that** the precursors of an alkali metal or alkaline-earth metal A are chosen from the salts of thermolabile anions, such as carbonates, hydrogen carbonates, hydroxides, peroxides and nitrates; the salts of volatile organic acids such as acetates and formates; the salts of acids that can decompose when hot, such as oxalates, malonates and citrates.

3. The process as claimed in claim 2, **characterized in that** said precursors are chosen from Li₂CO₃, LiHCO₃, LiOH, Li₂O₂, LiNO₃, LiCH₃CO₂, LiCHO₂, Li₂C₂O₄, Li₃C₆H₅O₇, Na₂CO₃, NaOH, Na₂O₂, NaNO₃, NaCH₃CO₂, NaCHO₂, Na₂C₂O₄, Na₃C₆H₅O₇, K₂CO₃, KOH, K₂O₂, KO₂ KNO₃, KCH₃CO₂, KCHO₂, K₂C₂O₄, K₃C₆H₅O₇ and hydrates thereof.

4. The process as claimed in any one of claims 1 to 3, **characterized in that** the precursors of a transition metal M and of rare-earths are chosen from the salts of volatile inorganic acids, namely nitrates and carbonates, the salts of volatile organic acids, namely acetates and formates, the salts of acids that can decompose when hot, namely oxalates, malonates and citrates, and the salts of inorganic acids, namely sulfates, chlorides and bromides.

5. The process as claimed in any one of the preceding claims, **characterized in that** the precursors of the oxyanions YO₄ are chosen from the corresponding acids such as H₂SO₄, H₃PO₄; thermolabile ammonium, amine, imidazole or pyridine salts, for instance NH₄HSO₄, (NH₄)₂SO₄, NH₄HSeO₄, (NH₄)₂SeO₄, NH₄H₂PO₄, (NH₄)₂HPO₄, NH₄H₂AsO₄ or (NH₄)₂HAsO₄; silicon or germanium derivatives in the form of nanometric Si0₂ or GeO₂; tetraalkoxysilane or germane derivatives such as (R³O)₄Si and (R³O)₄Ge or the polymers -Si[OR₃)₂-I]ₚ (with 0 ≤ p ≤ 10⁴) and in which R³ represents an alkyl or alkyloxyalkyl group preferably containing from 1 to 10 carbon atoms.

6. The process as claimed in any one of claims 1 to 5, **characterized in that** the oxyanion precursors are chosen from AHSO₄, A₂SO₄, AHSeO₄, A₂SeO₄, AH₂P0₄, A₂HP0₄, A₃P0₄, AH₂As0₄, A₂HA_{S}0₄, A₃As0₄, A₄Si0₄, A₄GeO₄, A₂SiO₃, A₂GeO₃ and M₂Si₅O₁₃ in which A represents an alkali metal or alkaline-earth metal.

7. The process as claimed in claim 6, **characterized in that** the oxyanion precursors are chosen from LiHSO₄, Li₂SO₄, LiH₂PO₄, Li₃PO₄, Li₄SiO₄, Li₂SiO₃, Li₂Si₅O₁₃.

8. The process as claimed in any one of the preceding claims, **characterized in that** the amount of precursors present in the ionic liquid during step i) is from 0.01% to 85% by mass.

9. The process as claimed in any one of the preceding claims, **characterized in that** the oxides of formula (I) are chosen from the phosphates AₐMₘPO₄, the fluorophosphates AₐMₘPO₄F or MPO₄F, the fluorosulfates AₐMₘSO₄F, silicates of olivine structure Fe_{2-x-z}MnₓMg_{w}SiO₄, (0 ≤ x, w ≤ 2), and the mixed silicates with lithium Li₂Fe_{1-x'-w'}Mn_{x'}Mg_{w'}SiO₄ (0 ≤ x', w' ≤ 1), sulfates, silicophosphates, phosphosulfates, silicosulfates and phosphosilicosulfates.

10. The process as claimed in any one of the preceding claims, **characterized in that** the cations of the ionic liquid are chosen from the cations of the following formulae: 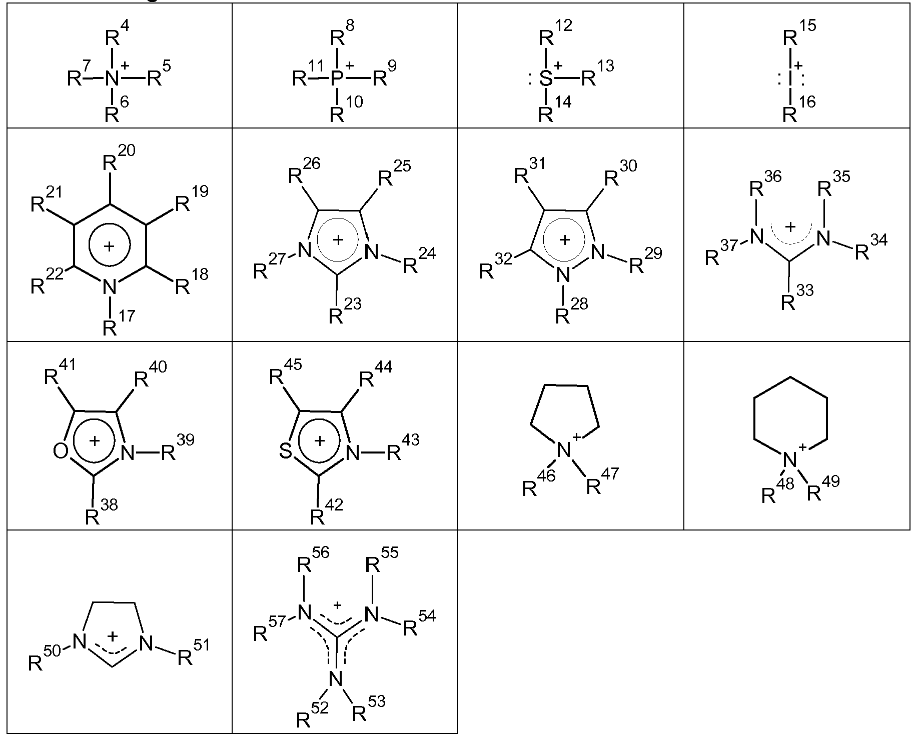 in which:
- the radicals R⁴-R¹⁷, R²⁷, R²⁴, R²⁸, R²⁹, R³⁷, R³⁴, R³⁹, R⁴³ and R⁴⁶ to R⁵⁷, independently of each other, represent a C₁-C₂₄ alkyl, C₁-C₂₄ arylalkyl or (C₁-C₂₄)alkylaryl radical;
- the radicals R¹⁸ to R²² R²³, R²⁵, R²⁶, R³⁰ to R³³, R³⁵, R³⁶, R³⁸, R⁴⁰ to R⁴², R⁴⁴ and R⁴⁵ represent a hydrogen atom, a C₁-C₂₄ alkyl radical, an aryl radical, a C₁-C₂₄ oxaalkyl radical or a radical [(CH)₂]ₘQ in which Q represents OH, CN, C(=O)OR⁵⁸, C(=O)NR⁵⁹R⁶⁰, NR⁶¹R⁶² or a 1-imidazoyl, 3-imidazoyl or 4-imidazoyl radical and m is a positive integer between 0 and 12 inclusive;
- the radicals R⁸ to R¹⁶ may also denote a (C₁-C₂₀)alkylaryl radical or a group NR⁶³R⁶⁴,
- R⁵⁸ to R⁶⁴, independently of each other, represent a hydrogen atom or a C₁-C₂₀ alkyl, aryl or C₁-C₂₀ oxaalkyl radical.

11. The process as claimed in any one of the preceding claims, **characterized in that** the anions of the ionic liquids are chosen from: Cl, Br, I, RSO₃⁻, ROSO₃⁻, [RPO₂]⁻, [R(R'O)PO₂]⁻, [(RO)₂PO₂]⁻, BF₄⁻, R_{f}BF₃⁻, PF₆⁻, R_{f}PF₅⁻, (R_{f})₂PF₄⁻, (R_{f})₃PF₃⁻, R_{f}CO₂⁻, R_{f}SO₃⁻, [(R_{f}SO₂)₂N]⁻, [(R_{f}SO₂)₂CH]⁻, [(R_{f}SO₂)₂C(CN)]⁻, [R_{f}SO₂C(CN)₂]⁻, [(R_{f}SO₂)₃C]⁻, N(CN)₂⁻, C(CN)₃⁻, [(C₂O₄)₂B]⁻ in which:
- R and R', which may be identical or different, represent a C₁-C₂₄ alkyl, aryl or (C₁-C₂₄)alkylaryl radical,
- R_{f} is a fluoro radical chosen from CₙF₂ₙ₊₁ in which 0 ≤ n ≤ 8, CF₃OCF₂, HCF₂CF₂ and C₆F₅.

12. The process as claimed in any one of the preceding claims, **characterized in that** the ionic liquid contains one or more carbon precursors chosen from simple carbohydrates such as sugars and polymerized carbohydrates such as starch and cellulose.

13. The process as claimed in claim 16, **characterized in that** the heating step ii) is continued beyond 380°C.

14. The process as claimed in any one of the preceding claims, **characterized in that** the heating step ii) is performed under an inert atmosphere, at atmospheric pressure.

15. The process as claimed in any one of the preceding claims, **characterized in that** the duration of the heating step ii) ranges from 10 minutes to 200 hours.
